# EUROPEAN PATENT SPECIFICATION

(11) **EP 4 495 331 B1**
(45) Date of publication and mention of the grant of the patent: **25.11.2026**
(21) Application number: 24185862.0
(22) Date of filing: 02.07.2024
(51) Int. Cl.: E02F 3/34, E02F 3/36, E02F 9/26

(54) **A VIRTUAL ASSIST APPARATUS FOR ASSISTING IN MUTUALLY ENGAGING A LOADER WITH A TARGET ITEM**
EIN VIRTUELLES HILFSGERÄT ZUR UNTERSTÜTZUNG DES GEGENSEITIGEN EINGRIFFS EINES LADEGERÄTS MIT EINEM ZIELOBJEKT
SYUN APPAREIL D'ASSISTANCE VIRTUELLE POUR AIDER À L'ENGAGEMENT MUTUEL D'UN CHARGEUR ET D'UN ARTICLE CIBLE

(30) Priority: 21.07.2023 US 202318356552
(43) Date of publication of application: 22.01.2025
(73) Proprietor: Deere & Company, Moline, IL 61265 (US)
(72) Inventor: Tagalpallewar, Nikhil D., Mannheim (DE); Goenka, Gopal M., Mannheim (DE); Joshi, Bharat J., Mannheim (DE); Patil, Vishwanath V., Mannheim (DE); Vazquez, Jose I., Mannheim (DE); Montemayor, Daniel Chapa, Mannheim (DE); Castaneda, Gerardo Gonzales, Mannheim (DE); Urbina, Jesus A. Montalvo, Mannheim (DE)
(74) Representative: Stein, Stefan

(56) References cited:
- EP-A1- 4 086 392
- EP-A1- 4 265 849
- US-A1- 2021 127 550

## Description

### Field of the Disclosure

The embodiments herein are directed to methods and systems that assist an operator mutually couple compatible implements with a loader of a tractor and mutually engage the implements with loads, and that assist the operator perform work activities with the attached compatible implement.

### Background

Many machines offer load manipulation that is outside of the strength and reach capabilities of the human body due for example to load size and the natural capacities or incapacities of human workers. Such machines may use hydraulic boom mechanisms for example that couple with an attachment such as an implement, a tool or the like on the end of the boom that is then in turn used to lift or otherwise manipulate heavy, large, or otherwise awkward loads. In addition, some machines may use such boom mechanisms having a tool carrier on a free end thereof that adapts the boom for mutual coupling with a wide variety of tools, implements, or the like via the tool carrier. In work vehicles such as tractors outfitted with such loaders, the tool carrier on the free end of the loader is typically provided with one or more attachment features such as one or more pins, hooks, or the like and, correspondingly, the implement is similarly provided with one or more attachment features such as one or more hooks, pins, or the like. The pins and hooks may be selectively mutually coupled for attaching the implement onto the tool carrier on the end of the loader, and they may be similarly selectively mutually decoupled for disconnecting the implement from the tool carrier of the loader so that another different tool may be attached to the loader. An example of a work machine with a loader and an assistance system with the features of the preamble of present claim is disclosed in US2021127550A1.

In order to ensure interoperability between the implements and loaders such as for example to help prevent damage between the mutually couplable implement and tool carrier attachment features or to help prevent damage to the loader in general through use of implements that would otherwise physically connect with the loader but are not specified for use therewith, it is important for the operator of the work vehicle to be able to verify interoperability between the loader and the implement intended to be used to perform the work function. In addition, after the implement is attached onto the tool carrier it is important for the operator of the work vehicle to be able to verify interoperability between the implement and the load intended to be handled by the loader to perform the work function.

For these reasons, work vehicle operators and in particular inexperienced operators may often spend a significant amount of time manually verifying compatibility of implements for use with loaders, and also a large amount of time ensuring alignment between the implement and the load when approaching the load, and between the load once lifted and a setting place for dropping off the load, etc. This time spent could otherwise be directed to performing the underlying work task at hand overall, and therefore leads to inefficient equipment utilization and reduced operator productivity. This problem is exacerbated when new implements are introduced into a work environment wherein the operators must learn the compatibilities and incompatibilities of each new implement through manual intervention, etc., in order to ensure that the wrong implement isn't attached to the loader of their vehicle, and also to ensure that the implement is usable with the load, resulting in inefficiencies and possible damage to the equipment.

It is therefore desirable to provide systems and methods that provide verification of interoperability of implements with loaders and/or of implements with tractors that carry the loaders.

In addition, the boom device structures of the loader mechanisms can sometimes block or otherwise obstruct the tool carrier from the view of the operator. This can make it difficult for the operator to efficiently position the tool carrier on the end of the boom relative to the implement for coupling the attachment features of the tool carrier with the corresponding attachment features of the implement. The tool or implement and the tool carrier portion of the loader may be laterally offset relative to each other, wherein one or more offset adjustment steps may be required to be performed by the operator in order to successfully couple the tool carrier with the attachment. This would require the operator to reposition the vehicle carrying the loader to move laterally to the left or right in order to properly laterally align the appropriate implement and tool carrier attachment portions for mutual coupling therebetween. In addition, the tool or implement and the tool carrier portion of the loader may be mutually inclined relative to each other, wherein one or more inclination adjustment steps may be required to be performed by the operator in order to successfully couple the tool carrier with the attachment. This would require the operator to reposition the vehicle carrying the loader to rotate about a yaw axis of the tractor in order to properly align the implement and tool carrier attachment portions for the mutual coupling therebetween.

For these reasons, work vehicle operators often need to execute multiple trials/iterations of vehicle pre-positioning and re-positioning in order to successfully attach the selected implement onto the loader carried by the vehicle.

Valuable operational time is therefore wasted by the operator performing these "pre-hooking" alignment operations. This problem is exacerbated in particular when the boom significantly or wholly blocks the tool carrier from the view of the operator. There are similar problems in engaging loads with implements on the end of the loader boom, and also with placing loads at desired resting places.

It is therefore further desirable to provide systems and methods that provide viewable images for assisting an operator to maneuver a work vehicle and a boom mechanism of the work vehicle with a tool carrier on an end thereof, collectively referred to herein as a "loader," relative to an associated attachment such as a tool, implement, or the like for efficiently establishing a mutual coupling between the tool carrier and the attachment.

In further addition, since the boom device structures of the loader mechanisms can also sometimes block or otherwise obstruct the tool carrier from the view of the operator during use of the implement, it is difficult for the operators of such equipment to know whether the implement being used is level as may be desired for performing the selected work functions such as for example lifting and placing loads This problem is made worse when it is desirable to know the level of the implement for each of several stages of operation of some work functions. Current mechanical level indicator systems such as for example level indicator rods provide some relief, but they are difficult to use because the operator must remain vigilant in monitoring the rod position while simultaneously maintaining attention to operating the position and movement of the vehicle as well as of the loader.

It is therefore still further desirable to provide systems and methods that provide implement height and level detection for performing work functions with the implements.

### Summary

The present invention is defined by the subject matter of claim 1. The embodiments herein are directed to methods and systems providing an operator of a vehicle with assistance with verification of interoperability of implements with loaders and/or of implements with tractors that carry the loaders, and for assisting with movement of a loader carried on an associated tractor for connection of a tool carrier of the loader with an implement and for engagement of the implements with loads such as for example to place loads over or on implements, and also for assisting in providing implement height and level detection as well as implement heading information for performing work functions with the implements such as to properly approach loads for engaging the loads with the implement, all for efficient and safe vehicle operation, material handling, and load manipulation. It is to be understood that material handling and manipulation includes changing material position such as picking up or laying down loads such as bales, pallets or the like, and boom attachment coupling such as when attaching an implement such as bucket or pallet fork to a carrier or receiver on the end of the boom of a loader. "Material handling" as used herein includes and is not limited to any and all operations were material or loads of any type are manipulated, moved, transported, and the like. Although the example embodiments will be described as systems and methods providing verification of compatibility of implements with loaders and/or tractors carrying the loaders, as well as providing viewable images for assisting mutual coupling of loaders and implements, and further providing implement height and level detection for performing work functions with the implements, all for efficient and safe vehicle and loader operation, and easy implement attachment, it is to be appreciated that the embodiments are not limited to those particular uses or applications, and may as well be used anywhere there is a desire to provide an operator of any type vehicle having equipment that may be selectively couplable with associated implements and/or tools for performing wide ranges of work functions or other uses of any type.

An embodiment herein is directed to methods and systems assisting an operator movement of a loader carried on a tractor to position the loader relative to an associated target item for mutually engaging the loader with the target item.

In an embodiment, the methods and systems assist an operator move the loader carried on the tractor to position a tool carrier disposed on the loader relative to an associated implement for mutually coupling the tool carrier with the implement .

In an embodiment, the methods and systems assist an operator move the loader carried on the tractor to position an implement coupled with a tool carrier carried on the loader relative to an associated load for mutually engaging the implement with the load.

An embodiment herein is directed to methods and systems assisting an operator with verification of interoperability of an implement with a tool carrier and/or of an implement with a tractor that carries the tool carrier on a boom.

An embodiment herein is directed to methods and systems assisting an operator with verification of interoperability of a load with an implement coupled with a tool carrier on an loader and/or of a load with a tractor that carries the implement on a boom of the loader.

An embodiment herein is directed to methods and systems assisting an operator to visualize and align portions of a tool carrier of a tractor relative to a material handling attachment such as an implement intended to be detachably coupled with the tool carrier, and to help visualize the position of one or more attachments on the tool carrier, such as to assist in properly approaching the implement to mutually couple the implement and the tool carrier.

An embodiment herein is directed to methods and systems assisting an operator to visualize and align portions of an implement carried on a tool carrier of a tractor relative to a load, and to help visualize the position of one or more attachments on the load and/or implement, such as to assist in properly approaching the load to mutually engage the load with the implement.

An embodiment herein is directed to methods and systems assisting an operator with implement height and level detection for performing work functions with the implements, including repeated work functions.

In accordance with an aspect herein, a virtual assist apparatus is provided for assisting movement of a loader carried on an associated tractor to position the loader relative to an associated target item for mutually engaging the loader with the associated target item. The virtual assist apparatus includes an imaging system, a guidance control apparatus, and a display unit. The imaging system operates to generate work area image data representative of an image of a work area adjacent to the tractor, wherein the work area image data includes loader image data representative of an image of the loader and work item image data representative of an image of the associated work item disposed in the work area. The guidance control apparatus is coupled with the imaging system and includes a processor device, a non-transient memory device operatively coupled with the processor device and storing the work area image data, and virtual guidance logic stored in the memory device. The display unit is operatively coupled with the guidance control apparatus and includes a screen that is viewable by an operator of the associated tractor. The processor is operable to execute the virtual guidance logic to generate, based on the work area image data tractor heading data representative of a tractor heading of the tractor, and load alignment guidance data representative of an target approach path providing access to a target attachment feature of the target item that is mutually engageable with a corresponding loader attachment feature of the loader. The display unit is operable to display, based on the work area image data, the target alignment guidance data, and the tractor heading data, viewable images of the tractor heading and the target approach path in a viewable image of the work area, for assisting the movement of the tractor to position the loader relative to the associated target item for mutually engaging the loader with the associated target item.

In an embodiment, the imaging system is operable to generate the work area image data comprising tool carrier image data representative of an image of a tool carrier of the loader, and implement image data representative of an image of an associated implement disposed in the work area. The processor is operable to execute the virtual guidance logic to generate, based on the work area image data, tool carrier heading data representative of a tool carrier heading of the tool carrier, and implement alignment guidance data representative of an implement approach path providing access to an implement attachment feature of the associated implement that is mutually coupleable with a corresponding carrier attachment feature of the tool carrier. The display unit is operable to display, based on the work area image data, the implement alignment guidance data, and the tool carrier heading data, viewable images of the tool carrier heading and the implement approach path in the viewable image of the work area, for assisting the movement of the loader to position the tool carrier relative to the associated implement for mutually coupling the tool carrier with the associated implement.

In an embodiment, the imaging system is operable to generate the work area image data comprising implement image data representative of an image of an implement carried on an end of the loader, and load image data representative of an image of an associated load disposed in the work area. The processor is operable to execute the virtual guidance logic 211 to generate, based on the work area image data, implement heading data representative of an implement heading of the implement, and load alignment guidance data representative of a load approach path providing access to a load engagement feature of the associated load that is mutually coupleable with a corresponding carrier attachment feature of the tool carrier. The display unit is operable to display, based on the work area image data, the load alignment guidance data, and the tool carrier heading data, viewable images of the tool carrier heading and the load path in the viewable image of the work area, for assisting the movement of the loader to position the implement relative to the associated load for mutually engaging the implement with the associated load.

In an embodiment, the image sensor device of the virtual assist apparatus includes one or more image sensor devices including for example one or more cameras. Each camera may be provided on a segment of an articulated boom. In particular and in accordance with an example embodiment, a camera is provided on the top of a cab of the work vehicle or at any other suitable position so that the tool carrier portion and each pivot joint and/or each degree of freedom of movement of an articulated boom may be visualized by the camera. The example embodiments described herein include for ease of description and understanding only a single camera for a loader having a single pivot or degree of freedom of movement.

In some embodiments an operator input comprises a touchscreen portion of the display unit or a pointer device operatively coupled with the guidance control apparatus, and the memory of the guidance control apparatus stores data corresponding to the boom position training signal received by the input during the training.

Other embodiments, features and advantages of the example embodiments for assisting an operator of a work vehicle to maneuver a loader of the work vehicle for handling of an attachment such as a tool or implement or the like by providing visual aids in the form of a visual movement instruction superimposed on a viewable image of the implement, wherein the visual movement instruction provides instructions to the operator for moving the loader relative to the implement for coupling the tool carrier of the loader with the implement. This helps the operator to guide operation of the loader to position a boom relative to level ground, to position a tool carrier relative to the boom, to show a preview of a path of the tool carrier, and to assist in positioning the tool carrier relative to an attachment for coupling the tool carrier with the attachment will become apparent from the following description of the embodiments, taken together with the accompanying drawings, which illustrate, by way of example, the principles of the example embodiments.

### Brief Description of the Drawings

In the accompanying drawings which are incorporated in and constitute a part of the specification, embodiments of the disclosure are illustrated, which, together with a general descriptions given above, and the detailed description given below, serve to exemplify the embodiments of this disclosure.
Figure 1 is a side view of a work vehicle including a virtual assist apparatus according to example embodiments of the present disclosure.
Fig. 2 is a hardware block diagram that illustrates a representative virtual assist apparatus according to the example embodiments.
Fig. 3 is a flow diagram showing a method of operating the subject virtual assist apparatus 100 in accordance with an example embodiment.
Fig. 4 is a diagram showing a functional flow of the virtual assist apparatus verifying a compatibility between a loader and a target item in accordance with an example embodiment.
Fig. 5 is a functional block diagram showing the virtual assist apparatus in accordance with an example embodiment.
Fig. 6 is a perspective view of a work environment showing a relationship between the physical work area and the virtual guidance information in accordance with an example embodiment.
Fig. 7 is an illustration showing an image of viewable guidance images displayed on a display unit for assisting an operator move a tractor carrying a loader relative to a target item in the form of an implement for pre-coupling the implement with the loader.
Fig. 8 is an illustration showing an image of viewable guidance images displayed on a display unit for assisting an operator move a tractor carrying a loader relative to a target item in the form of an implement for completing coupling the implement with the loader.
Fig. 9 is an illustration showing an image of viewable guidance images displayed on a display unit for assisting an operator move a tractor carrying an implement coupled with a tool carrier of a loader relative to a target item in the form of a load for pre-engaging with the load using the implement.
Fig. 10 illustrates a functional flow that provides implement height and level detection for performing work functions with the implements.

### Detailed Description

In the following description reference is made to the accompanying figures which form a part thereof, and in which is shown, by way of illustration, one or more example embodiments of the disclosed systems and methods providing assistance to an operator of a vehicle including assistance for verification of compatibility of implements with loaders and/or tractors carrying the loaders, for loader positioning for coupling an attachment onto a tool carrier on a free end of the loader, for engaging a load with an implement carried on the loader, and for providing implement height and level detection for performing work functions with the implements including performing repeated work functions automatically. Various modifications of the example embodiments may be contemplated by on of skill in the art.

As used herein, unless otherwise limited or modified, lists with elements that are separated by conjunctive terms (e.g., "and") and that are also preceded by the phrase "one or more of" or "at least one of" indicate configurations or arrangements that potentially include individual elements of the list, or any combination thereof. For example, "at least one of A, B, and C" or "one or more of A, B, and C" or "one or more of A, B, and/or C" indicates the possibilities of only A, only B, only C, or any combination of two or more of A, B, and C (e.g., A and B; B and C; A and C; or A, B, and C).

Furthermore, in detailing the disclosure, terms of direction, such as "forward," "rear," "front," "back," "lateral," "horizontal," and "vertical" may be used. Such terms are defined, at least in part, with respect to the direction in which the work vehicle or implement travels during use. The term "forward" and the abbreviated term "fore" (and any derivatives and variations) refer to a direction corresponding to the direction of travel of the work vehicle, while the term "aft" (and derivatives and variations) refer to an opposing direction. The term "fore-aft axis" may also reference an axis extending in fore and aft directions. By comparison, the term "lateral axis" may refer to an axis that is perpendicular to the fore-aft axis and extends in a horizontal plane; that is, a plane containing both the fore-aft and lateral axes. The term "vertical," as appearing herein, refers to an axis or a direction orthogonal to the horizontal plane containing the fore-aft and lateral axes. The term "yaw axis," as appearing herein, refers to an axis drawn from top to bottom (vertically) through a vehicle such as for example a tractor. The yaw axis is perpendicular to the fore-aft and lateral axes. Yaw rotation occurs as the tractor is steered left or right while moving forward or backwands a surface.

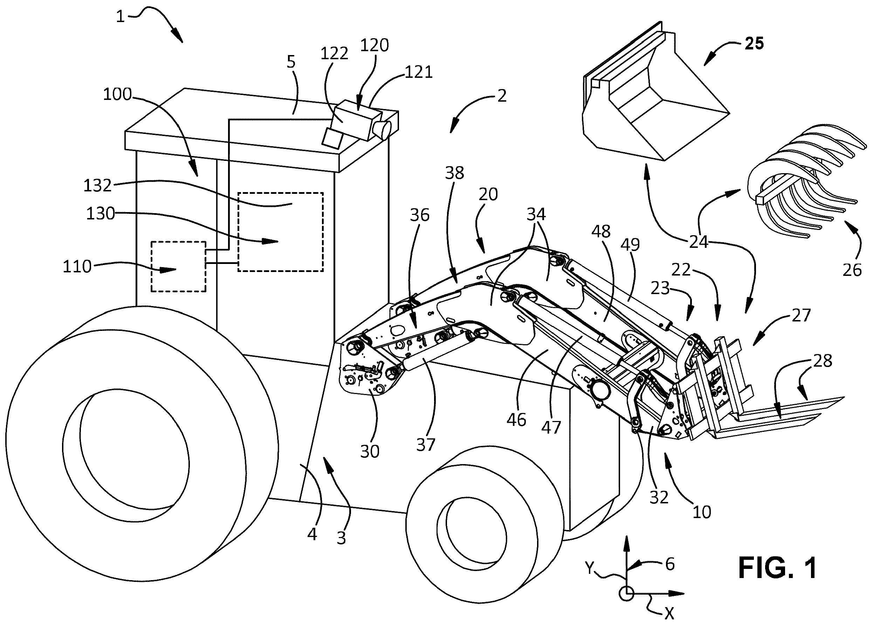

Referring now to the drawings, wherein the showings are only for the purpose of illustrating the example embodiments only and not for purposes of limiting the same, Figure 1 illustrates a work vehicle 1 that may be used with the virtual assist apparatus 100 according to example embodiments of the present disclosure. In the embodiment illustrated, the work vehicle 1 is a tractor 2 but it is to be appreciated that the embodiments herein are not limited to use with tractors or use with any particular mobile material handling equipment. For example, the work vehicle 1 may be a tractor without a cab such as for example an open station tractor, or a construction equipment work vehicle such as for example a construction loader. These are merely examples and the embodiments of the virtual assist apparatus 100 described herein are adapted for operation in any work vehicle now known or hereinafter developed. The virtual assist apparatus 100 of the example embodiments herein may execute or otherwise perform an implement verification method that provides verification of interoperability of implements with loaders and/or of implements with tractors that carry the loaders.

The virtual assist apparatus 100 of the example embodiments herein may further execute or otherwise perform a virtual guidance method providing visual aids for positioning a loader relative to an associated target item such as for example a tool and/or implement or an associated load, for material handling according to examples of the present disclosure. The visual aids may include for example, a visual movement instruction superimposed on a viewable image of the loader or implement carried on the loader displayed on a screen of a display unit, wherein the visual movement instruction provides instructions to the operator for moving the loader relative to the target item such as an implement or a load for coupling the tool carrier of the loader with the implement or for engaging the implement with the load. In particular, the visual aids may include for example, a viewable image of an implement approach path representative of an implement approach path providing a preferred route for accessing an implement attachment feature of the implement that is mutually coupleable with a corresponding carrier attachment feature of the tool carrier. The visual aids may further include for example a viewable image of a heading representative of a heading of the tool carrier. The viewable images of the tractor tool carrier heading and the implement approach path rendered on the screen of a display unit assist the operator to move the loader and/or tractor carrying the loader in order to position the tool carrier relative to an associated implement and, importantly, to move the tool carrier along the implement approach path that provides the preferred route for accessing the implement attachment feature of the implement for mutually coupling the tool carrier with the implement quickly and easily. The visual aids may further include for example, a viewable image of a load approach path representative of an approach path to the load that provides a preferred route for accessing an engagement feature of the load that is mutually engageable with a corresponding implement attachment feature of an implement coupled with the tool carrier. The visual aids may further include for example a viewable image of a heading representative of a heading of the implement. The viewable images of the implement heading and the load approach path rendered on the screen of a display unit assist the operator to move the implement carried on the loader and/or tractor carrying the loader in order to position the implement relative to an associated load and, importantly, to move the implement on the tool carrier along the load approach path that provides the preferred route for accessing the load engagement feature for mutually engaging the implement with the associated load quickly and easily.

To provide a useful, albeit non-limiting example, the virtual assist apparatus 100 of the example embodiments is described below in conjunction with a particular type of work vehicle 1, shown in the form of a tractor 2, equipped with particular types of work implements 24 such as a pallet fork implement 27, a bucket implement 25, a grapple implement 26, etc. included in an front end loader (FEL) attachment. The following notwithstanding, it is emphasized that embodiments of the virtual assist apparatus 100 may be deployed onboard various other types of work vehicles having one or more movable implements attached thereto. The virtual assist apparatus 100 of the example embodiment shown includes an imaging system 120 including for example an image sensor device 121. The virtual assist apparatus 100 may adjust physically and/or electronically one or more operational characteristics of the one or more imaging devices such as the imaging system 120 including for example the image sensor device 121, or other optical device(s) in response to movement of various different types of work implements without limitation. The virtual assist apparatus 100 may be distributed as an integral part of a work vehicle, as an integral part of a loader 10 attachment or other module that may be removably attached to and detached from a work vehicle on an as-needed basis, or as a discrete assembly or multi-component kit that may be installed on an existing work vehicle via retrofit attachment. The imaging system 120 is operable in general to generate work area image data representative of an image of a work area adjacent to the tractor. In particular, the work area image data generated by the imaging system 120 comprises loader image data representative of an image of the loader and target image data representative of an image of the associated target item disposed in the work area. The work area image data generated by the imaging system 120 may further comprise tool carrier image data representative of an image of the tool carrier of the tractor, and implement image data representative of an image of an associated implement disposed in the work area. The work area image data generated by the imaging system 120 may still further comprise implement image data representative of an image of an implement coupled with the tool carrier of the tractor, and load image data representative of an image of an associated load item disposed in the work area.

The image sensor device 121 may include one or more cameras 122 operable to generate image data representative of an image of objects and background within the field of view of the one or more cameras. The cameras 122 may be monocular cameras, stereo cameras, and may include for example devices that use optical sensing technology to determine the position, velocity, or other characteristics of objects in the field of view by analysis of pulsed laser light reflected from their surfaces. Such devices may use Light Detection and Ranging (LIDAR) technologies. In further addition, the image sensor device 121 may include one or more cameras 122 operable to generate image data representative of an image of objects and background within the field of view of the one or more cameras using Radio Detection and Ranging (RADAR) technologies, for example.

In some examples, the image sensor device 121 can be mounted on the cab facing forwards toward the bucket, attachment, or other work tool. For example, the camera 122 can be mounted on the front surface of the cab 5 or the top surface (e.g., roof) of the cab 5. The image sensor device 121 can transmit images (or video signals) wirelessly to a display or though wiring that extends along an arm, boom, or other frame structure of the work vehicle to the display. In other examples, the camera can be mounted on an arm of the work vehicle, including the lower surface, upper surface, or sides of the arm structure used to support the bucket, attachment, or other work tool or device used during operation of the work vehicle. Alternatively, the camera can be mounted on a boom of the work vehicle, including the lower surface, upper surface, or sides of the boom that is commonly used to support the arm and is attached to the main body of the work vehicle. Still further the image sensor device 121 may be mounted to the hood or in an area near the hood and/or anywhere else as may be necessary or desired to obtain suitable complete attachment image views in vehicles of other types such as for example open station tractors, harvesters, construction equipment loaders, etc.

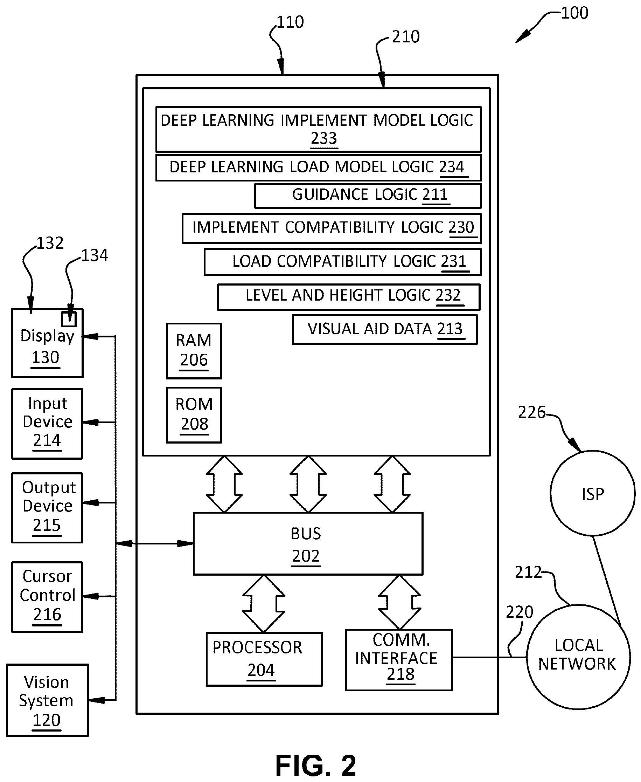

Fig. 1 is a side perspective view of a tractor 2 including a front end loader 10 attachment and a virtual assist apparatus 100, as illustrated in accordance with an example embodiment of the present disclosure. The virtual assist apparatus 100 is only partially shown in Fig. 1 and an example embodiment of which will be described more fully below in conjunction with Fig. 2. First, however, a general description of the tractor 2 is provided to establish an example context in which the virtual assist apparatus 100 may be better understood. In addition to the loader 10 attachment and the imaging system 120, the tractor 2 includes a vehicle body 3 having a chassis 4, and a cab 5. The tractor 2 is generally bilaterally symmetrical about its longitudinal axis, which is parallel to the X-axis identified in Fig. 1 by coordinate legend 6.

In accordance with an example embodiment and as will be described in greater detail below, the visual movement instructions provide instructions to the operator for laterally moving the loader in the horizontal plane X relative to the target items such as an implement or a load in directions perpendicular to a forward direction of the tractor for mutually coupling the carrier and implement attachment features and for mutually engaging implement and load engagement features of the implement and load, respectively. The visual movement instructions also provide instructions to the operator for moving the loader relative to the target items such as implements or a loads about the vertical or yaw axis Y perpendicular to the forward direction of the tractor such as by steering the tractor to the left and/or right while moving forward or backwards for mutually coupling the carrier and implement attachment features and for mutually engaging implement and load engagement features of the implement and load, respectively.

In the illustrated embodiment, the work vehicle 1 includes a loader 10 provided for material handling of an associated load. The loader 10 of the work vehicle 1 illustrated includes an articulated boom 20 having a tool carrier 22 on a free end 23 of the boom 20. The tool carrier 22 portion of the loader 10 may be for example a receiver mechanism or other similar device or apparatus provided on the free end 23 of the boom 20 for enabling coupling of an attachment such as an implement or a tool for example with the free end 23 of the boom 20. In this regard, the tool carrier 22 is selectively mutually connectable with one or more various attachments, tools or implements 24 such as for example the bucket implement 25, the grapple implement 26, the pallet fork implement 27 having a set of pallet tines 28, a gripper (not shown), a bail hugger (not shown), a bale spear (not shown), and/or various working devices as may be available and/or desired. Each of the various tools or implements 24 has a preferred and possibly unique implement approach path providing a preferred route for accessing an attachment feature of the respective implement that is mutually coupleable with a corresponding carrier attachment feature of the tool carrier. Each of the various tools or implements 24 also has a preferred and possibly unique path providing a preferred route for accessing an engagement feature of a load with the respective feature of the implement. In general and overall, the subject virtual assist apparatus 100 generates a tractor heading image and target approach path images for assisting the movement of the tractor to position the loader relative to the associated target item for mutually engaging the loader with the associated target item. In an example embodiment, the subject virtual assist apparatus 100 generates a tool carrier heading image and an implement approach path image for the respective implement intended to be attached that are displayed on a screen 132 of a display unit 130 in a manner to be described in greater detail below, wherein the viewable images of the tool carrier heading image and the implement approach path image assist the operator to move the loader and/or tractor carrying the loader to position the carrier attachment feature of the tool carrier relative to the corresponding implement attachment feature of the implement for mutually coupling the tool carrier with the implement. The subject virtual assist apparatus 100 further generates an implement heading image and a load approach path image for the respective load intended to be engaged by the implement that are displayed on a screen 132 of a display unit 130 in a manner to be described in greater detail below, wherein the viewable images of the implement heading image and the load approach path assist the operator to move the implement carried on the loader and/or tractor carrying the loader to position the engagement feature of the implement relative to the corresponding engagement feature of the associated load for mutually engaging the implement with the load.

The articulated boom 20 of the loader 10 movably mounts the tool carrier 22 carrying a selected one of the one or more various attachments, tools or implements 24 to a forward portion of the vehicle body 3 and, more specifically, mounts the tool carrier 22 to chassis 4. In the illustrated example, the pallet fork implement 27 is shown attached with the tool carrier 22 but it is to be appreciated that the pallet fork implement 27 may be replaced by any different type of work implement, such as any of the bucket implement 25, the grapple implement 26, the gripper, the bail hugger, the bale spear, all as mentioned above, or any other work implement as necessary and/or desired, in alternative embodiments of the tractor 2. In the Figure, the tines 28 of the loader 27 comprise the engagement features of the implement 24. Similarly, the tines (not numbered) of the grapple implement 26 and the front lower edge (not numbered) of the bucket implement 25 may comprise the engagement features of the grapple implement 26 and the bucket implement 25, respectively. The articulated boom 20 assembly may assume any form capable of moving the work implement 24 relative the vehicle body 4 in response to operator commands. In the example embodiment shown in Fig. 1, the boom assembly 20 includes a system of linkages, hydraulic cylinders, plumbing lines (not shown), and other components suitable for this purpose. More specifically, the boom assembly 20 includes an aft bracket set 30 affixed to the vehicle body 4, a forward bracket set 32 to which the tool carrier 22 carrying the pallet fork implement 27 is pivotally attached, and an intermediate or mid bracket set 34 between the aft and forward bracket sets 30, 32. Twin lift arms 36, 38 pivotally attach the aft bracket set 30 with the mid bracket set 34, which is, in turn, attached with the forward bracket set 32 by twin implement arms 46, 48. Lift cylinders 37, 39 (only one of which can be seen) are further coupled between the aft bracket set 30 and the mid bracket set 34, while bucket cylinders 47, 49 are coupled between the mid bracket set 34 and the forward bracket set 33.

In the example embodiment the image sensor device 121 is mounted on the cab facing forwards toward the bucket, attachment, or other work tool so that all of the lift arms 36, 38, the implement arms 46, 48, the aft, mid, and forward bracket sets 30, 34, 32, any implements attached with or intended to be attached with the boom, as well as the work area adjacent to the tractor are within the field of view of the imaging system 120. Additionally, embodiments the virtual assist apparatus 100 may adjust one or more operational characteristics of one or more imaging devices such as an imaging system 120 including for example an image sensor device 121, or other optical device(s) in response to movement of various different types of work implements without limitation for this purpose. In embodiments of the subject virtual assist apparatus or controller 100 operable with associated work vehicles having a different configuration, the image sensor device 121 may be mounted at other locations such as on the hood of open station tractors, on a transverse support tube of the loader 27, or other areas of the loader, for example.

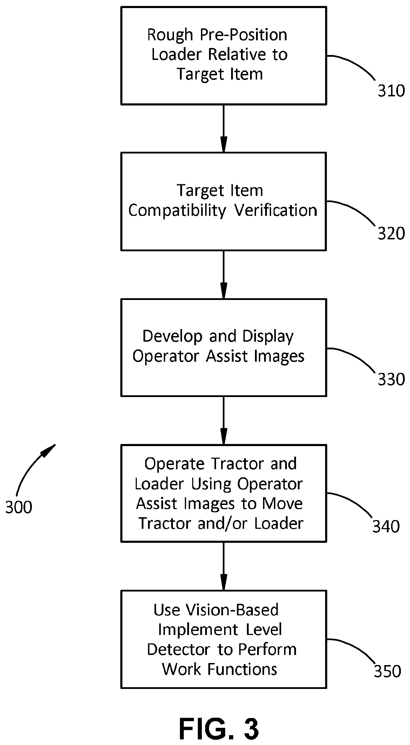

The loader 10 attachment further includes other features, such as hydraulic lines and control valves, which are not shown in Fig. 1 for simplicity. When the loader 10 is mounted to the vehicle body 4, the hydraulic lines of the loader 10 are fluidly connected to a pressurized hydraulic fluid supply on the tractor 2 in a manner permitting an operator seated within the cab 5 to control the cylinders 37, 39, 47, and 49. Beginning from a ground position, an operator may command the boom assembly 20 of the loader 10 to lift the tool carrier 22 with and/or without the pallet fork implement 27 or any other implements carried on the tool carrier 22 as shown by controlling the lift cylinders 37, 39 to extend. As the lift cylinders 37, 39 retract, the boom 20 comprising the pallet fork implement 27 when so carried on the tool carrier 22 is lowered from a full height position to a lowered position. In the process of moving from the full height position to the lowered position, the boom 20 travels through the intermediate or mast level position shown in Fig. 1. Similarly, as the bucket cylinders 47, 49 extend in response to operator commands, the boom assembly 20 tilts the pallet fork implement 27 when so carried on the tool carrier 22 from the upright position through an intermediate position to the forward-facing lift position. Conversely, the operator may control the boom assembly 20 to stroke cylinders 37, 38, 47, 48 in a manner opposite to that just described to return the pallet fork implement 27 when so carried on the tool carrier 22 from the grounded, forward-facing lift position to the raised full height position shown in Fig. 3.

It is to be appreciated that the motion of the cylinders 37, 39, 47, and 49 may be controlled directly by operator manipulation of various levers, pedals and/or other human interface device(s) operatively coupled with hydraulic control components of the system, and further that the motion of the loader 10 may be indirectly controlled by the operator rendering motion commands to via the virtual assist apparatus 100 which in turn may operate the various hydraulic control components of the system for moving the cylinders 37, 39, 47, and 49 thereby effecting the desired movement of the loader 10. It is still further to be appreciated that the motion of the cylinders 37, 39, 47, and 49 may be controlled by the virtual assist apparatus 100 automatically and/or semi-automatically in response to generalized operator commands such as for example return to position (RTP) commands wherein for example the virtual assist apparatus 100 may function in an RTP mode to automatically return the boom 20 overall, portions of the boom 20 such as for example the lift arms 36, 38 and/or the implement arms 46, 48, the various attachments, tools or implements 24 when so carried on the tool carrier 22, to one or more pre-stored position(s) in response to operator input. It is to be appreciated that all of the above operations and movements may be performed prior to attaching any of the various work implements 24 with the tool carrier 22.

In the example embodiment shown in the Figures, the empty tool carrier 22 and/or the implements 24 when so carried on the tool carrier 22 are moved by the boom 20 along a vertical plane containing or parallel to the longitudinal axis of the body 4 of the tractor 2 (corresponding to an X-Y plane in coordinate legend 6). The imaging system 120 thus need only have a field of view (vertical in the example embodiment) rotatable about a single rotational axis to remain trained on the empty tool carrier 22 and/or on the implements 24 when so carried on the tool carrier 22 throughout the range of motion of the loader 10 relative to the body 4 of the tractor 2. For the image sensor device 121 shown this rotational axis is parallel to the lateral axis of the tractor 2; a "lateral axis" of the tractor 2 (or other work vehicle) defined as an axis extending within a horizontal plane (an X-Z plane in coordinate legend 6) and perpendicular to the longitudinal axis of the tractor 2. Stated differently, a lateral axis of tractor 2 is parallel to the Z-axis in coordinate legend 6, and image sensor device 121 may be selectively rotatable in a further example embodiment about a rotational axis likewise parallel to the Z-axis, although in the example embodiment described herein the image sensor device 121 remains fixed relative to the work vehicle 1 and in particular relative to the cab 5 of the tractor 2 and, as such remains fixed relative the a rotational axis likewise parallel to the Z-axis. In other embodiments wherein the virtual assist apparatus 100 is deployed onboard a work vehicle including a backhoe or other implement that is rotatable about a horizontal axis (corresponding to the Y-axis in coordinate legend 6), the image sensor device 121 or other optical device or optical devices included within the virtual assist apparatus 100 may be selectively rotatable about multiple axes including an axis parallel to the horizontal axis.

The image sensor device 121 or other optical device or devices included with the virtual assist apparatus 100 may also be imparted with additional degrees of freedom in further embodiments. For example, the image sensor device 121 may be moved to translate along any axis in three dimensional space, as appropriate to better visually capture the pallet fork implement 27 or other implement 24 throughout its full range of motion relative to the body 4 of the tractor 2. For example, and as may be appreciated, the image sensor device 121 may be mounted on a telescopic post that extends vertically upward when the pallet fork implement 27 or other implement 24 is moved into the full height position to provide a better vantage point for observation of markers on the pallet fork implement 27 or other implement 24 as will be described below to minimize the degree to which the boom assembly 20 visually obstructs the camera's view of the pallet fork implement 27 or other implement 24. In addition, the virtual assist apparatus 100 may electronically adjust one or more operational characteristics of the one or more imaging devices such as the imaging system 120 including for example the image sensor device 121, or other optical device(s) in response to movement of various different types of work implements without limitation to minimize the degree to which the boom assembly 20 visually obstructs the camera's view of the pallet fork implement 27 or other implement 24.

The articulated boom 20 may be maneuvered such as by actuating various hydraulic cylinders 37, 39, 47, 49 to extend or retract and to lower or raise an articulated boom 20 relative to the work vehicle so that the tool carrier 22 may be positioned for coupling the boom 20 with the one or more various implements 24. The tool carrier 22 disposed on the end of the boom 20 collectively forms a loader 10 in accordance with the example embodiments. In an example embodiment herein, the one or more various implements 24 may be initially considered as a workpiece prior to being coupled with the tool carrier 22 of the loader 10 wherein an operator may desire for the one or more various implements 24 and the tool carrier 22 to be mutually latched joined or otherwise mechanically coupled prior to performing a material handling task or the like. As an example, an operator may wish to couple the pallet fork implement 27 with the tool carrier 22 prior to proceeding to approach, lift, and place a palletized load at a desired location.

In accordance with an example embodiment and as will be described in greater detail below, the virtual assist apparatus 100 provides assistance to an operator with regard to verification of interoperability of an implement with a tool carrier and/or of an implement with a tractor that carries the tool carrier on a boom prior to the attempted mutual coupling therebetween. The virtual assist apparatus 100 further provides assistance to an operator with regard to verification of interoperability of an implement with a load and/or of a load with a tractor that carries the implement on a boom prior to the attempted mutual engage the load with the implement. In addition, the visual aids described herein are developed by the system 100 and provided to the operator of the associated work vehicle 1 for assisting in properly locating the tool carrier 22 on the free end 23 of the boom 20 at a desired height relative to the ground, and also for providing further visual aids for assisting in properly raising, lowering and/or tilting the tool carrier 22 to a desired orientation or inclination for enabling coupling of the carrier 22 with the selected attachment 24, and further for positioning the work vehicle 1 relative to the selected implement 24 for moving the vehicle 1 supporting the tool carrier 22 into a coupling relationship with the selected implement 24 for mutually connecting attachment features of the tool carrier 22 with corresponding attachment features of the selected implement 24. In addition and following attaching the implement 24 with the tool carrier 22, the virtual assist apparatus 100 provides assistance to an operator with regard to engaging a load using the implement. In addition and following attaching the implement 24 with the tool carrier 22, the virtual assist apparatus 100 provides assistance to an operator with regard to implement height and level detection for performing work functions with the implements, including repeated work functions for training the system for RTP operation or the like.

In addition, the visual aids described herein are developed by the system and provided to the operator of the associated work vehicle 1 for properly locating the tool carrier 22 on the free end 23 of the boom 20 at a desired height relative to the ground for training the system for RTP operation, and also for providing further visual aids for assisting in properly raising, lowering and/or tilting the tool carrier 22 to a desired orientation or inclination for enabling coupling of the carrier 22 with the selected attachment 24 and for engaging a load with an implement having been coupled with the loader, for training the system for the RTP operation, and further for positioning the work vehicle 1 relative to the selected implement 24 for moving the vehicle 1 supporting the tool carrier 22 into a coupling relationship with the selected implement 24 for mutually connecting the tool carrier 22 with the selected implement 24 and for mutually engaging a load with the implement, for training the system for the RTP operation.

In accordance with an example embodiment, the virtual assist apparatus 100 includes a guidance control apparatus 110, an imaging system 120 such as an image sensor device 121 mounted on the associated work vehicle 1 and operatively coupled with the guidance control apparatus 110, and a display unit 130 operatively coupled with the guidance control apparatus 110.

The display unit 130 can be positioned in the cab 5 or elsewhere in or on the work vehicle. The display unit 130 can be positioned so as to be viewable by the operator while the operator manipulates the work vehicle's controls to perform a task. And the display unit 130 can be positioned so as not to hinder the opening or closing of any latches, hatches, windows, or doors in the cab. In some examples, the display can be mounted on the exterior of the cab 5, such as to a rollover protection structure (ROPS), via a mounting device. This can enable the operator to view the display while operating the controls of the work vehicle. In other examples, the display unit 130 can be positioned in the cab 5, for example, by using a vertical support pillar that forms the structure of the ROPS. The vertical support pillar can be located in front of the operator or behind the operator while the operator is seated in the cab 5. Additionally or alternatively, the display unit 130 can be positioned in the cab using a cross member that spans across a vertical support pillar. The cross member can be positioned in front of, behind, or on the sides of the operator while the operator is seated in the cab 5. The display unit 130 can additionally or alternatively be positioned on a supporting structure inside the cab 5 for the controls (e.g., pilot controls) used to operate the work vehicle 1. The controls can control the rotation of the work vehicle 1; the boom 20, arm, or work tool 24; or any combination of these. In some examples, the display unit 130 can be an existing monitor in the work vehicle that typically shows other information, such as operating parameters (e.g., engine speed, fuel level, and engine temperature) of the work vehicle. In such an example, the monitor may be modified to perform the functionality of the display unit 130.

The display unit 130 is operatively coupled with the guidance control apparatus 110, and receives the work area image data, tractor heading data representative of the heading of the tractor, and the target item alignment guidance data representative of the target approach path providing access to associated target item that is mutually coupleable or engagable with a corresponding feature of the loader. The display unit 130 displays on a screen 132 of the display unit that is viewable by the user from a user station of the associated work vehicle 1 a viewable image of the work area adjacent to the tractor 2 including an image of the loader 10 of the work vehicle and target item based on the work area image data. The display unit 130 also displays on the screen 132 viewable images of the tractor heading and the target item implement approach path in a viewable image of the work area, for assisting the movement of the loader and tractor to position the loader relative to an target item for mutually engaging the loader with the target item. In the example embodiment, the viewable images are dynamically rendered on the screen 132 superimposed over a dynamic viewable image of the loader, and superimposed on the viewable image of the target item such as an implement, load, or the like.

As appearing herein, the term "image sensor device" refers to an optical device, a camera system, electrical light, or other device that generates and/or detects visible and/or invisible light or other electromagnetic radiation. The guidance control apparatus 110 includes a processor device 204 (Fig. 2) and a non-transient memory device 210 (Fig. 2) operatively coupled with the processor device 204 in a manner to be described in greater detail below. The memory device 210 stores virtual guidance logic 211 (Fig. 2) executable by the processor device 204 to generate, based on work area image data generated by the imaging system 120 heading data representative of a heading of the tool carrier, and implement alignment guidance data representative of an implement approach path providing access to an implement attachment feature of the implement that is mutually coupleable with a corresponding carrier attachment feature of the tool carrier. The display unit 130 is operable to display on a screen 132 thereof, based on the work area image data, the implement alignment guidance data, and the heading data, viewable images of a tool carrier heading and an implement approach path in a viewable image of the work area, for assisting the movement of the loader to position the tool carrier relative to an associated implement for mutually coupling the tool carrier with the implement. In addition, the memory device 210 stores implement compatibility verification logic 230, and implement height and level detection and control logic 232 to be described in greater detail below.

In accordance with an example embodiment, the non-transient memory device 210 may store an implement database comprising a first implement data set correlating a first implement type of a first implement with first implement alignment guidance data representative of an implement approach path providing access to an implement attachment feature of the first implement, and a second implement data set correlating a second implement type of a second implement with second implement alignment guidance data representative of an implement approach path providing access to an implement attachment feature of the second implement. The implement database may comprise a plurality of implement data sets correlating a corresponding plurality of implement types of a plurality of implements with a corresponding plurality of sets of implement alignment guidance data representative of a plurality of implement approach paths providing access to implement attachment features of the plurality of implements.

Fig. 2 is a block diagram that illustrates a representative virtual assist apparatus 100 according to the example embodiments. The virtual assist apparatus 100 is suitable for executing embodiments of one or more software systems or logic modules that perform a virtual guidance method for assisting an operator of an associated work vehicle by providing verification of compatibility of implements and loads with loaders and/or tractors carrying the loaders, as well as by providing viewable images for assisting mutual coupling of loaders and implements and engagement of loads with the implements, and by further providing implement height and level detection for performing work functions with the implements including repeated work functions automatically.

The representative virtual assist apparatus 100 according to the example embodiments comprises a guidance control apparatus 110 that includes a bus 202 or other communication mechanism for communicating information, and a processor device 204 coupled with the bus for processing information. The guidance control apparatus 110 further a main non-transitory memory device 210 that may comprise one or more memory portions or components or collection of other devices such as random access memory (RAM) 206 or other dynamic storage device for storing information and instructions to be executed by the processor device 204, and read only memory (ROM) 208 or other static storage device for storing static information and instructions for the processor device 204. The memory device 210 is also suitably provided for storing the virtual guidance logic 211 comprising instructions for execution by the processor, and other information including for example data and instructions for execution by the processor for obtaining and displaying visual aids on the screen 132 of the display unit 130 that is viewable from an operator's seat of the associated work vehicle 1. The visual aids are displayed for helping to guide the user in operating the loader to position a boom relative to the work vehicle, to position the boom and/or tool carrier relative to level ground, to position the tool carrier 22 on the free end 23 thereof relative to the one or more various attachments or implements 24 to be coupled with the carrier 22, to position the one or more various attachments or implements 24 relative to the boom and/or relative to the ground.

The memory device 210 may further store implement compatibility verification logic 230 that is executable by the processor device 204 to determine a compatibility between the tool carrier and the associated implement to mutually couple the tool carrier with the implement, and generate implement compatibility data based on determining the compatibility between the tool carrier and the associated implement to mutually coupling the tool carrier with the implement, wherein the display unit is operable to display a viewable image of the implement compatibility data, based on the determining the compatibility for confirming to the operator the determined compatibility between the tool carrier and the associated implement.

The memory device 210 may further store load compatibility verification logic 231 that is executable by the processor device 204 to determine a compatibility between the implement coupled with the tool carrier and the associated load to mutually engage the load with the implement, and generate load compatibility data based on determining the compatibility between the implement and the associated load to permit mutual engagement between the implement and the load, wherein the display unit is operable to display a viewable image of the load compatibility data, based on the determining the compatibility for confirming to the operator the determined compatibility between the implement and the associated load.

The memory device 210 may further store implement height and level detection and control logic 232 that is executable by the processor for performing work functions with the implements at selected and/or selectable heights and/or levels including for example repeated work functions in an automated fashion.

The example embodiments described herein are related to the virtual assist apparatus or controller 100 performing a method providing visual aids that assist an operator of an associated work vehicle to maneuver a loader on a tractor relative to an associated target item such as an implement to couple the implement or other attachment onto a tool carrier of the loader, and to assist the operator maneuver the implement having been coupled with the loader relative to an associated workpiece for engaging the load item with the implement. According to one implementation, information for the visual aids to be displayed on the screen of the display unit in the form herein of visual offset movement instructions and visual inclination movement instructions are provided by the virtual assist apparatus or controller 100 in response to the processor device 204 executing the virtual guidance logic 211 comprising one or more sequences of instructions of logic modules contained in main memory 206. Such instructions may be read into main memory 206 from another computer-readable medium, such as storage device 210. Execution of the sequences of the virtual guidance logic 211 instructions contained in storage device 210 and/or main memory 206 causes the processor device 204 to perform the process steps described herein. In an alternative implementation, hard-wired circuitry may be used in place of or in combination with software instructions to implement the example embodiments. Thus implementations of the example embodiments are not limited to any specific combination of hardware circuitry, software, logic, or combinations of hardware, software, and/or logic.

In accordance with the descriptions herein, the term "computer-readable medium" as used herein refers to any non-transitory media that participates in providing virtual guidance logic 211 instructions to the processor device 204 for execution. Such a non-transitory medium may take many forms, including but not limited to volatile and non-volatile media. Non-volatile media includes, for example, optical or magnetic disks. Volatile media includes dynamic memory for example and does not include transitory signals, carrier waves, or the like. Common forms of computer-readable media include, for example, a floppy disk, a flexible disk, hard disk, magnetic tape, or any other magnetic medium, a CD-ROM, any other optical medium, punch cards, papertape, any other physical medium with patterns of holes, a RAM, PROM, and EPROM, a FLASH-EPROM, any other memory chip or cartridge, or any other tangible non-transitory medium from which a computer can read.

In addition and further in accordance with the descriptions herein, the term "logic", as used herein with respect to the Figures, includes hardware, firmware, software in execution on a machine, and/or combinations of each to perform a function(s) or an action(s), and/or to cause a function or action from another logic, method, and/or system. Logic may include a software controlled microprocessor, a discrete logic (e.g., ASIC), an analog circuit, a digital circuit, a programmed logic device, a memory device containing instructions, and so on. Logic may include one or more gates, combinations of gates, or other circuit components.

The virtual assist apparatus or controller 100 further includes a communication interface 218 coupled with the bus 202 which provides a two-way data communication coupling to a network link 220 that is connected to local network 212 such as for example a local network of the work vehicle 1 such as a Controller Area Network (CAN) bus or the like. The communication interface 218 may be a controller area network (CAN) card to provide a data communication connection to a compatible CAN bus. As another example, communication interface 218 may be a local area network (LAN) card to provide a data communication connection to a compatible LAN. For example, communication interface 218 may be an integrated services digital network (ISDN) card or a modem to provide a data communication connection to a corresponding type of telephone line. Wireless links may also be implemented. In any such implementation, communication interface 218 may be a wireless receiver/transmitter, i.e. a transceiver operable to send and receive electrical, electromagnetic, radio frequency (RF), and/or optical signals that carry data streams such as digital data streams representing various types of information.

Network link 220 typically provides data communication through one or more networks to other data devices. For example, network link 220 may provide a connection through a local network to a diagnostic host computer (not shown) of the like for supporting configuration of the system as desired or necessary. An Internet Service Provider (ISP) 226 may provide data communication services indirectly through the Internet via the network 212 or directly through the network link 220.

The example virtual assist apparatus or controller 100 can send messages and receive data, including program code, through the network(s), network link 220 and communication interface 218. In an Internet-connected example embodiment, the virtual assist apparatus or controller 100 is operatively connected with a plurality of external public, private, governmental or commercial servers (not shown) configured to execute a web application in accordance with example embodiments. The example virtual assist apparatus or controller 100 suitably includes several subsystems or modules to perform the virtual operator's guidance as set forth herein. A benefit of the subject application is to provide improved guidance by displaying offset and inclination movement guidance instructions on a screen 132 of a display unit 130 that is viewable from an operator's seat of the associated work vehicle for helping the operator to view current positions of the loader and tool mechanisms as well as to visualize preferred or recommended movements of the loader and tool carrier mechanisms to safely and efficiently couple the tool carrier with a tool to safely and efficiently attach the tool onto the tool carrier portion of the loader. An output device 215 may also be provided such as in the form of a sound generating device such as a speaker to help improve guidance assistance by generating audible guidance instructions in the form of audible instructions and/or suitable instructional noises such as beeps, voice messages or the like that can be heard from an operator's seat of the associated work vehicle for helping the operator to be alerted to current positions of the mechanisms as well as to be audibly instructed of preferred or recommended paths for movement of the loader and/or tool carrier mechanisms to safely and efficiently load, unload, or otherwise couple the desired implement 24 with the tool carrier 22, and also to handle the material using the implement 24 received onto the carrier 22.

The example embodiment of the virtual assist apparatus further includes an input device 214 operatively coupled with the guidance control apparatus. The input device 214 may be used during a training of the virtual assist apparatus for receiving a boom and tool carrier position training signal representative of the first predetermined target location alignment of the boom and tool carrier to establish a predetermined relative physical position between the tool carrier portion of the loader and a selected implement disposed on the ground adjacent to the associated work vehicle. In an example embodiment the input device 214 may include a touchscreen portion 134 of the display unit 130, a pointer device 216 operatively coupled with the guidance control apparatus, or any other device or means of communicating training and other information to the control unit 110 of the virtual guidance assist apparatus 100.

In an example embodiment during system training, the operator may first position the boom 20 and tool carrier 22 to a desired position relative to the ground, then enter a command on the touchscreen 134 using a pointer or finger onto a selected portion of the menu image while the boom and tool carrier are in their desired positions, thereby identifying a boom position training signal representative of a selectable command on the screen for alignment of the boom and tool carrier to establish a desired relative physical position between the tool carrier and the implement relative to the ground. The desired relative physical position between the tool carrier and the implement relative to the ground may be represented as a desired height of the tool carrier and the implement relative to the ground, a desired level of the tool carrier and the implement relative to the ground, or both a desired height and level of the tool carrier and the implement relative to the ground.

Fig. 3 is a flow diagram showing a method 300 of operating the subject virtual assist apparatus 100 in accordance with an example embodiment. At 310 the operator rough pre-positions the loader relative to a target item. In an example embodiment, the operator may operator may rough pre-position a tool carrier on an end of the loader relative to a target item comprising an implement such as for example, the pallet fork implement 27. In a further example embodiment, the operator may operator may rough pre-position an implement having been coupled with the tool carrier of the loader relative to a target item comprising an associated load.

At 320 the subject virtual assist apparatus 100 performs a compatibility verification. In an example embodiment, the virtual assist apparatus 100 may execute the implement compatibility verification logic 230 to determine a compatibility between the tool carrier on the loader and an implement comprising the target item. In a further example embodiment, the virtual assist apparatus 100 may execute the load compatibility verification logic 231 to determine a compatibility between the tractor and/or the implement coupled with the tool carrier and an associated load. The virtual assist apparatus 100 may provide a warning to the operator of any incompatibilities as between the tool carrier and the target implement and/or as between the implement and the target load.

At 330 the subject virtual assist apparatus 100 develops and displays operator assist images for assisting movement of a loader carried on a tractor to position the loader relative to an associated target item for mutually engaging the loader with the target. In an example embodiment, the virtual assist apparatus 100 may develop and display operator assist images for assisting movement of a tool carrier carried on a loader of a tractor to position the tool carrier relative to an associated implement target item for mutually coupling the tool carrier with the associated implement. In a further example embodiment, the virtual assist apparatus 100 may develop and display operator assist images for assisting movement of an implement having been coupled with the tool carrier on a loader of a tractor to position the implement relative to an associated load target item for mutually engaging the implement with the associated load.

At 340 the operator may operate the tractor using the operator assist images developed and displayed at 330 by the subject virtual assist apparatus 100 to move the tractor and/or loader carried on the tractor to position the loader relative to the associated target item for mutually engaging the loader with the target item. In an example embodiment, the operator moves the tractor and/or loader carried on the tractor to position a tool carrier of the loader relative to an associated implement item for mutually coupling the tool carrier with the implement. In a further example embodiment, the operator moves the tractor and/or loader carried on the tractor to position a implement having been coupled with a tool carrier relative to an associated load for mutually engaging the load using the implement.

At 350 the subject virtual assist apparatus 100 develops and displays operator assist images using vision-based implement level detection to assist an operator perform work functions. In this regard, the subject virtual assist apparatus 100 develops and displays visual aids described herein that are provided to the operator of the associated work vehicle 1 for properly locating the tool carrier 22 on the free end 23 of the boom 20 at a desired height relative to the ground for training the system for RTP operation, and also for providing further visual aids for assisting in properly raising, lowering and/or tilting the tool carrier 22 to a desired orientation or inclination for enabling coupling of the carrier 22 with the selected attachment 24 and for engaging a load with an implement having been coupled with the loader, for training the system for the RTP operation, and further for positioning the work vehicle 1 relative to the selected implement 24 for moving the vehicle 1 supporting the tool carrier 22 into a coupling relationship with the selected implement 24 for mutually connecting the tool carrier 22 with the selected implement 24 and for mutually engaging a load with the implement, for training the system for the RTP operation.

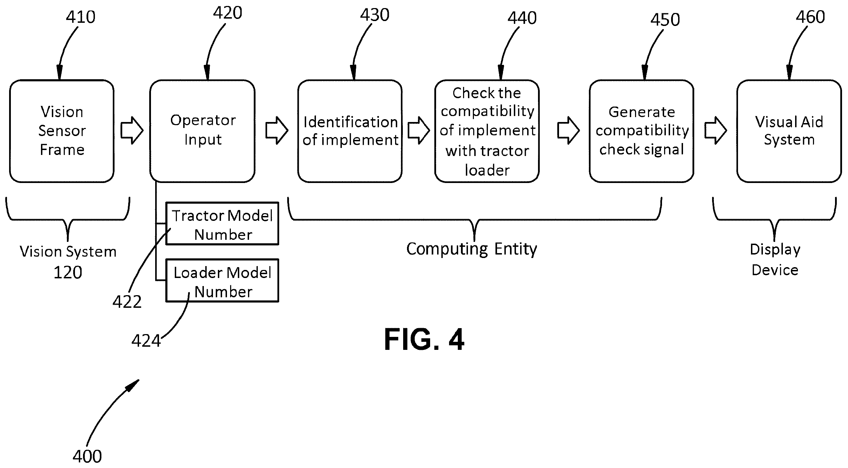

Fig. 4 is a diagram showing a functional flow 400 of the virtual assist apparatus 100 verifying a compatibility between a loader 47 and a target item in accordance with an example embodiment. In the example embodiment shown, the virtual assist apparatus 100 verifies a compatibility between a loader 47 and a target item using deep learning. In the example embodiment shown, the virtual assist apparatus 100 verifies a compatibility between a tool carrier 22 of the loader 47 and a target item comprising an implement 24 using deep learning. It is to be appreciated however that in further embodiments the virtual assist apparatus 100 verifies a compatibility between an implement having been coupled with a tool carrier 22 and a target item comprising an associated load using deep learning.

Overall, the processor is operable to execute the implement compatibility verification logic 230 in accordance with an example embodiment to determine, based on implement characteristic data and tool carrier characteristic data, a compatibility between the tool carrier and the associated implement to mutually couple the tool carrier with the implement. In this way, the virtual assist apparatus 100 provides assistance to an operator with regard to verification of interoperability of an implement with a tool carrier and/or of an implement with a tractor that carries the tool carrier on a boom prior to the attempted mutual coupling therebetween. The processor is further operable to execute the load compatibility verification logic 231 in accordance with an example embodiment to determine, based on load characteristic data and implement characteristic data, a compatibility between the implement and the associated load to mutually engage the load using the implement. In this way, the virtual assist apparatus 100 provides assistance to an operator with regard to verification of interoperability of a load with an implement and/or of a load with a tractor that carries the tool carrier and implement on a boom prior to the attempted mutual engage the load with the implement.

At 410 an image of the implement is received. In an example embodiment, the image of the implement may be obtained using the imaging system 120. In the example illustrated, the imaging system 120 operates to generate work area image data representative of an image of a work area adjacent to the tractor, wherein the work area image data includes implement image data representative of an image of the associated implement disposed in the work area. It is to be appreciated that at 410 an image of a load may equivalently be received. In this example embodiment, the image of the load may be obtained using the imaging system 120. In this example, the imaging system 120 operates to generate work area image data representative of an image of a work area adjacent to the tractor, wherein the work area image data includes load image data representative of an image of the associated load disposed in the work area.

At 420 information relating to the loader is obtained. In an example embodiment, the information relating to the loader may be obtained from the operator of the tractor such as by the operator inputting data by making a selection of a menu item or by entering raw data using for example the touchscreen 134. The display device 130 may offer several menu items to the operator such as for example tractor model number 422 and loader model number 424. The operator may enter the tractor model number and the loader model number via empty field presentations provided on the touchscreen or the operator may be presented with selectable example tractor and loader model numbers having related data already stored in the memory device 210.

At 430 the implement is identified. In this example embodiment, deep learning is used to identify the implement. In an example embodiment, the processor device is operable to execute a deep learning implement detection model 233 to automatically detect, based on the implement image data, the physical characteristic of the associated implement and store the detected physical characteristic of the associated implement in the memory device 210 as implement characteristic data for determining the compatibility between the tool carrier and the associated implement to mutually couple the tool carrier with the implement. In the example embodiment, the virtual guidance apparatus 100 is functional 300 to identify in general one or more attachment(s) of the implement, and to identify one or more attachment features such as hooks or the like on the attachment using the deep learning implement detection model 233. In this example, the camera device 121 is operable to generate the implement image data, wherein the implement image data comprises implement attachment feature data representative of an image of the implement attachment feature of the implement, and the processor 204 is operable to execute the logic 233 to automatically detect the implement as well as the attachment feature(s) of the implement relative to the camera device based on the implement attachment feature data of the implement image data, and to automatically generate, based on the automatically detected implement attachment feature, the implement characteristic data for use in determining the compatibility between the tool carrier and the associated implement to mutually couple the tool carrier with the implement.

The deep learning detection model may comprise, for example, a deep learning neural network for object detection including for example for detection of the one or more attachment features on the implement.

The deep learning detection model may comprise, for example, a pre-build build model such as for example, Resnet, Mobilnet, InceptionV2, or the like.

It is to be appreciated that at 430 the associated load may be identified. In this example embodiment, deep learning is used to identify the load. In an example embodiment, the processor device is operable to execute a deep learning load detection model 234 to automatically detect, based on load image data, the physical characteristic of the associated load and store the detected physical characteristic of the associated load in the memory device 210 as load characteristic data for determining the compatibility between the implement and load to mutually engage the load with the implement. In the example embodiment, the virtual guidance apparatus 100 is functional 300 to identify in general one or more attachment(s) of the load, and to identify one or more load attachment features such as hooks or the like on the attachment using the deep learning load detection model 234. The processor 204 is operable to execute the logic 234 to automatically detect the load as well as the load attachment feature(s) based on load attachment feature data of the load image data, and to automatically generate, based on the automatically detected load attachment feature, the load characteristic data for use in determining the compatibility between the tractor and/or implement and the load to permit engagement of the load using the implement.

At 440 the functional flow 400 of the virtual assist apparatus 100 may also verify compatibility between the load and the loader and/or the implement that was determined using the deep learning detection model. In this regard, the processor device 204 is operable to execute the load compatibility verification logic 231 to determine, based on the load characteristic data obtained using the deep learning detection model and the load characteristic data such as from the operator for example, a compatibility between the implement and the load to permit engagement of the load using the implement.

At 450 the functional flow 400 of the virtual assist apparatus 100 generates a compatibility check signal such as for example implement compatibility data based on determining the compatibility between the tool carrier and the associated implement to mutually coupling the tool carrier with the implement. In a further example embodiment, the virtual assist apparatus 100 generates a load compatibility check signal based on determining the compatibility between the associated load and the implement to permit engaging the load with the implement.

At 460 the functional flow 400 of the virtual assist apparatus 100 displays the result of the compatibility check on as visual aid device such as for example on the display unit 130. In this regard and in the example embodiment, the display unit is operable to display a viewable image of the implement compatibility data, based on the determining the compatibility for confirming to the operator the determined compatibility between the tool carrier and the associated implement.

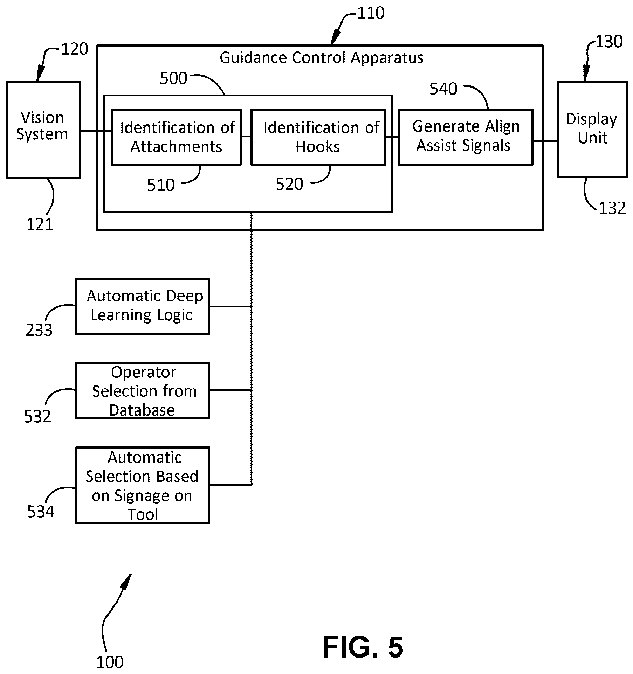

Fig. 5 is a functional block diagram showing the virtual assist apparatus 100 in accordance with an example embodiment. As shown the virtual assist apparatus 100 includes a guidance control apparatus 110, an imaging system 120 in the form in the example of an image sensor device 121, and a display unit 130 including a screen 132 that is viewable by an operator of the tractor. The imaging system 120 is operable to generate work area image data that includes loader image data such as tool carrier image data representative of an image of the tool carrier 22 and target item image data such as implement image data representative of an image of the associated implement 24 disposed in the work area adjacent to the tractor. In a further example embodiment, the target item image data may include load image data representative of an image of an associated load in the work area.

In the example embodiment, the virtual assist apparatus 100 is operable in the functional block 500 to identify 510 an attachment such as an implement for example, and to identify 520 one or more attachment features such as hooks or the like on the attachment. The identification functional block 500 is also operative to identify one or more attachment features such as hooks or the like on the tool carrier that are selectively couplable with the attachment features of the attachment such as for example one or more attachment features of an implement. In addition, the virtual assist apparatus 100 is functional to generate 540 one or more align assist signals for assisting movement of a loader carried on an associated tractor for connection of a tool carrier of the loader with an attachment such as for example for connection of a tool carrier of the loader with an implement. In a further example embodiment, the virtual assist apparatus 100 is functional to generate one or more align assist signals for assisting movement of an attachment such as an implement having been coupled with a tool carrier of a loader carried on an associated tractor for engagement of the implement with an associated load such as for example to place loads over or on implements.

In the example embodiment, the processor device 204 is operable in the function 500 to execute virtual guidance logic stored in the memory device 210 based on the work area image data to generate heading data and implement alignment guidance data, wherein the heading data is representative of a heading of the tool carrier, and the implement alignment guidance data is representative of an implement approach path providing access to an implement attachment feature of the implement that is mutually coupleable with a corresponding carrier attachment feature of the tool carrier. In a further example embodiment, the generated heading data and implement alignment guidance data may comprise tractor heading data representative of a heading of the tractor and load alignment guidance data representative of an approach path providing access to an engagement feature of a load that is mutually engageable with a corresponding feature of an implement coupled with the tool carrier.

In the example embodiment shown in the Figure, the display unit 130 is operable to display on the screen 132, based on the work area image data, the implement alignment guidance data, and the heading data, viewable images of the heading and the implement approach path in a viewable image of the work area, for assisting the movement of the loader to position the tool carrier relative to an associated implement for mutually coupling the tool carrier with the implement. As will be described in greater detail below, the processor is operable to execute the virtual guidance logic to generate the alignment guidance data based on the implement image data and to generate the heading data based on the tool carrier image data, wherein the display unit is operable to display, based on the implement image data and the alignment guidance data, the viewable image of the implement approach path superimposed on a viewable image of the implement displayed on the screen.

In addition, the display unit is operable to display, based on the implement image data and the alignment guidance data, the viewable image of the implement approach path as one or more viewable approach path ray images extending from the viewable image of the implement displayed on the screen. In further addition, the display unit is operable to display, based on the tool carrier image data and the heading data, the viewable image of the heading as one or more viewable heading ray images extending from the viewable image of the tool carrier displayed on the screen. In accordance with the example embodiments, the viewable image of the implement approach path is displayed as one or more viewable approach path ray images extending perpendicularly from an imaginary plane defined by a front of the viewable image of the implement. Similarly, the viewable image of the heading is displayed as one or more viewable heading ray images extending perpendicularly from an imaginary plane defined by a front of the viewable image of the tool carrier.

In this way the methods and systems herein assist an operator to visualize and align portions of a tool carrier of a tractor relative to a material handling attachment such as an implement intended to be detachably coupled with the tool carrier, and to help visualize the position of one or more attachments on the tool carrier, such as to assist in properly approaching the implement to mutually couple the implement and the tool carrier. In particular, the operator physically repostionining the tractor relative to the implement in order to realize an alignment on the screen of the one or more viewable approach path ray images displayed on the screen with the one or more viewable heading ray images displayed on the screen establishes a physical alignment between the carrier attachment feature of the tool carrier and the implement attachment feature of the implement for pre-staging mutual coupling therebetween. In an example, the operator may move the associated tractor about a yaw axis of the tractor by steering it to the left or right while driving the tractor forwards or backwards. These operator actions establish a physical repositioning of the tool carrier relative to the implement as prescribed by the alignment goal on the screen between the one or more viewable approach path ray images with the one or more viewable heading ray images to thereby establish an alignment between the carrier attachment feature of the tool carrier and the implement attachment feature of the implement for pre-staging mutual coupling therebetween.

Also in the example embodiment, the virtual assist apparatus 100 is functional 500 to identify 510 an attachment, and to identify 520 one or more attachment features such as hooks or the like on the attachment using a deep learning detection model 233. In this example, the image sensor device 121 is operable to generate the implement image data, wherein the implement image data comprises implement attachment feature data representative of an image of the implement attachment feature of the implement, and the processor device 204 is operable to execute the logic 233 to automatically detect the implement attachment feature of the implement relative to the image sensor device based on the implement attachment feature data of the implement image data, and to automatically generate, based on the automatically detected implement attachment feature, the alignment guidance data representative of the incremental movement for moving the loader relative to the implement for mutually coupling the carrier and implement attachment features.

Further in this example, the logic 211 stored in the memory device 210 comprises a deep learning detection model 233, and the processor device 204 is operable to execute the deep learning detection model to automatically detect the implement attachment feature of the implement relative to the vision device based on the implement attachment feature data of the implement image data.

In a further example embodiment, the virtual assist apparatus 100 is functional 500 to identify 510 an attachment, and to identify 520 one or more attachment features such as hooks or the like on the attachment using a functional operation 532 to receive a selection from an operator of attachment information from a database stored in the memory device 210. The guidance control apparatus in this example embodiment includes an implement database stored in the memory device, wherein the implement database includes a first implement data set correlating a first implement type of a first implement with first attachment feature location data representative of one or more locations of one or more physical implement attachment features of the first implement, and a second implement data set correlating a second implement type of a second implement with second attachment feature location data representative of one or more locations of one or more physical implement attachment features of the second implement. The guidance control apparatus is operable to receive an implement identification signal, wherein the implement identification signal being representative of an identity of the implement. The processor is operable to execute the logic to select, based on the implement identification signal corresponding to a one of the first or second implement types, a corresponding one of the first or second implement data sets from the implement database, and to automatically generate, based on the implement image data and on the first or second attachment feature location data corresponding to the selected one of the first or second implement data sets, the alignment guidance data representative of the incremental movement for moving the loader relative to the implement for mutually coupling the carrier and implement attachment features.

In an example embodiment the input device 214 may include a touchscreen portion 134 of the display unit 130, a pointer device 216 operatively coupled with the guidance control apparatus, or any other device or means of communicating training and other information to the control unit 110 of the virtual guidance assist apparatus 100. The operator interface is operable to receive an implement selection signal from an operator of the tractor, and to generate the implement identification signal corresponding to the received implement selection signal.

In a further embodiment, the selection of information from the database is made based on signage carried on the implement. In this connection, the processor is operable to execute the logic to detect, based on the implement image data, identification indicia carried on the implement, and to determine the detected indicia being representative of a one of the first or second implement types. The logic is further executable to select, based on the detected indicia being determined to be representative of a one of the first or second implement types, a corresponding one of the first or second implement data sets from the implement database, and to automatically generate, based on the implement image data and on the first or second attachment feature location data corresponding to the selected one of the first or second implement data sets, the alignment guidance data representative of the incremental movement for moving the loader relative to the implement for mutually coupling the carrier and implement attachment features.

In a still further example embodiment, the virtual assist apparatus 100 is functional 500 to identify 510 an attachment, and to identify 520 one or more attachment features such as hooks or the like on the attachment using an automatic selection 534 based on information received into the guidance control apparatus 110 and obtained from information contained on signage carried on the associated implement. By way of example, the signage may comprise a bar code, a QR code, or the like, or any signage that may embed information into markings formed by the signage. The processor is operable to execute the logic to detect, based on the implement image data, implement information indicia carried on the implement, and to determine, based on detecting the implement information indicia, attachment feature location data representative of one or more locations of one or more physical implement attachment features of the implement. The processor is operable to execute the logic to automatically generate, based on the implement image data and on the attachment feature location data, the alignment guidance data representative of the incremental movement for moving the loader relative to the implement for mutually coupling the carrier and implement attachment features.

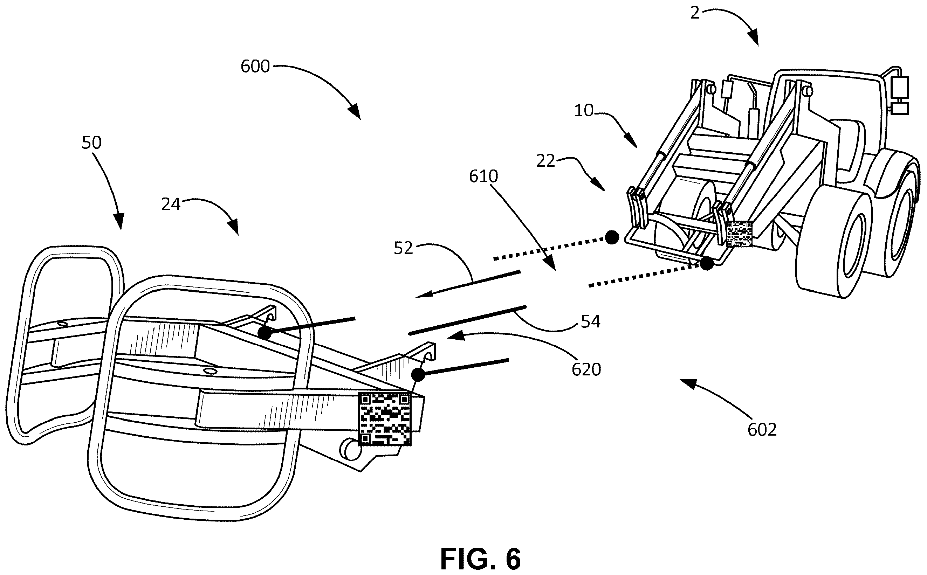

Fig. 6 is a perspective view of a physical work environment 600 that includes a tractor 2 and a target item 50 represented in the Figure as an implement 24 spaced from and adjacent to the tractor 2 in the work area. The showings of Fig. 6 are useful for illustrating the relationship between the virtual guidance information provided to the vehicle operator by the systems and methods of the present disclosure and the physical work area and equipment disposed in the work area.

As described above and in general, the processor 204 is operable to execute the virtual guidance logic 211 to generate, based on work area image data, tractor heading data representative of a tractor heading of the tractor, and target alignment guidance data representative of a target approach path providing access to a target attachment feature of the target that is mutually engageable with a corresponding loader attachment feature of the loader. The display unit 130 is operable to display, based on the work area image data, the target alignment guidance data, and the tractor heading data, a viewable tractor heading image 52 representative of the determined tractor heading and a target approach path image 54 representative of the determined target approach path. The tractor heading and target approach path images 52, 54 are displayed in a viewable image of the work area, for assisting the movement of the tractor to position the loader relative to the associated target item 50 for mutually engaging the loader with the associated target item 50. In accordance with an example embodiment, the tractor heading image 52 is displayed as an intermittent set of one or more non-continuous lines that turn persistent and solid to indicate proper alignment to/with the target approach path image 54. Likewise and in accordance with an example embodiment, the target approach path image 54 may be displayed as an intermittent set of one or more non-continuous lines that turn persistent and solid to indicate proper alignment to/with the tractor heading image 52.

In the particular example embodiment illustrated, the processor 204 is operable to execute the virtual guidance logic 211 to generate heading data and implement guidance data based on work area image data generated by the imaging system. The heading data is representative of a heading of the physical tool carrier 22 on the loader 10 of the tractor 2, and the implement alignment guidance data is representative of an implement approach path providing access to an implement attachment feature of the implement 24 that is mutually coupleable with a corresponding carrier attachment feature of the tool carrier 22. The display unit 130 is operable to display, based on the work area image data, the implement alignment guidance data of the work area image data, and the heading data of the work area image data, a viewable image 610 of the heading of the tool carrier, and a viewable image 620 of the implement approach path. The heading and implement approach path viewable images 610, 620 are displayed in a viewable image 602 of the work area, for assisting the movement of the loader to position the tool carrier relative to an associated implement for mutually coupling the tool carrier with the implement. In accordance with an example embodiment, the viewable image 620 of the implement approach path is displayed as an intermittent set of one or more non-continuous lines that turn persistent and solid to indicate proper alignment to/with the viewable image 610 of the heading of the tool carrier. Likewise and in accordance with an example embodiment, the viewable image 610 of the heading of the tool carrier may be displayed as an intermittent set of one or more non-continuous lines that turn persistent and solid to indicate proper alignment to/with the viewable image 620 of the implement approach path.

In order to assist the operator mutually couple the implement with the tool carrier, the operator need only steer the tractor towards the implement in a manner to realize an overlay or coincidence between the viewable image 610 of the heading of the tool carrier, and the viewable image 620 of the implement approach path. By lining up the viewable image 610 of the heading of the tool carrier with the a viewable image 620 of the implement approach path with the tractor spaced from the implement and prior to moving the tractor towards the implement, the operator is ensured that the carrier attachment feature of the tool carrier will be brought towards the implement attachment feature of the implement along an implement approach path that provides access to the implement attachment feature of the implement. In that way, the tool carrier and the implement may be mutually coupled.

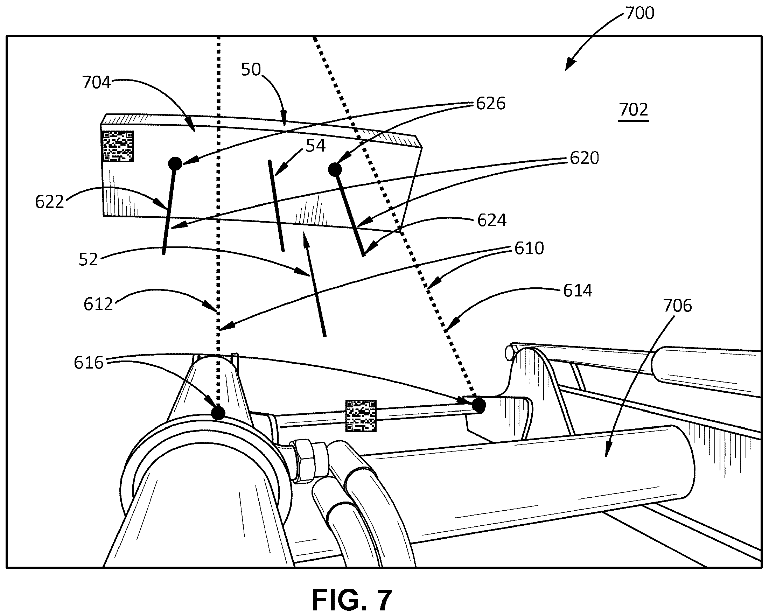

Fig. 7 is an illustration showing an image 700 of viewable guidance images displayed on a screen 132 of a display unit 130 for assisting an operator move a tractor carrying a loader relative to an associated target item in the form in the illustrated example of an implement for pre-coupling the implement with the loader. The display unit 130 is operable to display, based on the work area image data, the implement alignment guidance data, and the heading data, a viewable image 610 of the heading of the tractor or carrier, and a viewable image 620 of the implement approach path in a viewable image 702 of the work area, for assisting the movement of the loader to position the tool carrier relative to an associated implement for pre-coupling the implement with the loader.

In addition and as shown, the display unit 130 is operable to display, based on implement image data and alignment guidance data generated by the processor executing virtual guidance logic, the viewable image 620 of the implement approach path superimposed on a viewable image 704 of the implement displayed on the screen. In addition, the display unit 130 is operable to display, based on tool carrier image data and heading data generated by the processor executing virtual guidance logic, the viewable image 610 of the heading superimposed on a viewable image 706 of the tool carrier displayed on the screen. In accordance with an example embodiment, the viewable image 620 of the implement approach path is displayed as an intermittent set of one or more non-continuous lines that turn persistent and solid to indicate proper alignment to/with the viewable image 610 of the heading of the tool carrier. Likewise and in accordance with an example embodiment, the viewable image 610 of the heading of the tool carrier may be displayed as an intermittent set of one or more non-continuous lines that turn persistent and solid to indicate proper alignment to/with the viewable image 620 of the implement approach path.

The processor device 204 is operable to execute the virtual guidance logic 211 to generate approach path ray data based on the alignment guidance data, and heading ray data based on the heading data.

The display unit is operable to display, based on the implement image data and the approach path ray data, the viewable image of the implement approach path 620 as one or more viewable approach path ray images 622, 624 extending from the viewable image of the implement 704 displayed on the screen.

The display unit 130 is further operable to display, based on the tool carrier image data and the heading ray data, the viewable image of the heading as one or more viewable heading ray images 612, 614 extending from the viewable image of the tool carrier 706 displayed on the screen.

For assisting the operator position the tractor and loader carried thereon relative to the implement, an alignment on the screen of the one or more viewable approach path ray images 622, 624 displayed on the screen with the one or more viewable heading ray images 612, 614 displayed on the screen by the operator moving the associated tractor about a yaw axis (the Y-axis Fig. 1) of the tractor relative to the implement establishes an alignment between the carrier attachment feature of the tool carrier and the implement attachment feature of the implement for pre-staging mutual coupling therebetween. In accordance with an example embodiment, the one or more viewable approach path ray images 622, 624 are displayed as an intermittent set of one or more non-continuous lines that turn persistent and solid to indicate proper alignment to/with the one or more viewable heading ray images 612, 614. Likewise and in accordance with an example embodiment, the one or more viewable heading ray images 612, 614 may be displayed as an intermittent set of one or more non-continuous lines that turn persistent and solid to indicate proper alignment to/with the one or more viewable approach path ray images 622, 624.

The processor device 204 is operable to execute the virtual guidance logic 211 to generate implement connection completion target indicia data based on the alignment guidance data and the approach path ray data, and carrier connection completion target indicia data based on the heading data and the heading ray data.

In addition, the display unit of the virtual assist apparatus according to the example embodiment is operable to display, based on the implement image data and the implement connection completion target indicia data, a viewable implement connection completion target indicia image 626 defining a position along the one or more viewable approach path ray images 622, 624 representative of an implement connection completion confirmation.

In further addition, the display unit is operable to display, based on the tool carrier image data and the carrier connection completion target indicia data, a viewable carrier connection completion target indicia image 616 defining a position along the one or more viewable heading ray images 612, 614 representative of a tool carrier connection completion confirmation. In accordance with an example embodiment, the implement connection completion target indicia image 626 may be displayed as an intermittent set of one or more non-continuous shapes or forms such as circles as shown or lines that turn persistent and solid to indicate proper alignment to/with the carrier connection completion target indicia image 616. Likewise an in accordance with an example embodiment, the carrier connection completion target indicia image 616 may be displayed as an intermittent set of one or more non-continuous shapes or forms such as circles as shown or lines that turn persistent and solid to indicate proper alignment to/with the implement connection completion target indicia image 626.

As shown in Fig. 7, there is no alignment on the screen of the one or more viewable approach path ray images 622, 624 with the one or more viewable heading ray images 612, 614. Accordingly, the operator must move the associated tractor about the yaw axis (the Y-axis Fig. 1) of the tractor relative to the implement in order to establish an alignment between the carrier attachment feature of the tool carrier and the implement attachment feature of the implement for pre-staging mutual coupling therebetween.

In further addition, since the one or more viewable carrier connection completion target indicia image 616 are not coincident on the display screen with the one or more viewable implement connection completion target indicia image 626, the implement attachment feature of the implement is far from being mutually coupleable with a corresponding carrier attachment feature of the tool carrier. The physical attachment features are spaced apart as indicated by the distance between the one or more viewable carrier connection completion target indicia image 616 and the display screen with the one or more viewable implement connection completion target indicia image 626. In general, a coincidence on the screen of the viewable implement connection completion target indicia image displayed on the screen with the viewable tool carrier connection completion target indicia image displayed on the screen by the operator moving the tool carrier carried on the loader of the associated tractor towards the implement is representative of a confirmation of the mutual coupling between the carrier attachment feature of the tool carrier with the implement attachment feature of the associated implement.

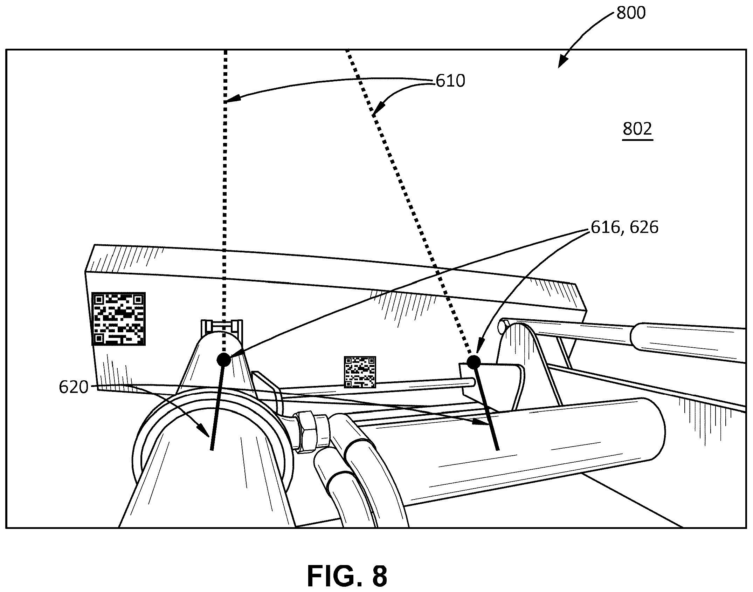

Fig. 8 is an illustration showing an image 800 of viewable guidance images displayed on a screen 132 of a display unit 130 for assisting an operator move a tractor carrying a loader relative to an implement for completing coupling the implement with the loader.

As shown in Fig. 8, there is alignment on the screen of the one or more viewable approach path ray images 622, 624 with the one or more viewable heading ray images 612, 614. Accordingly, the operator has successfully moved the associated tractor about the yaw axis (the Y-axis Fig. 1) of the tractor relative to the implement in order to establish the alignment between the carrier attachment feature of the tool carrier and the implement attachment feature of the implement for completing the mutual coupling therebetween.

In further addition, since the one or more viewable carrier connection completion target indicia image 616 are coincident on the display screen with the one or more viewable implement connection completion target indicia image 626, the implement attachment feature of the implement is confirmed to be mutually coupleable with the corresponding carrier attachment feature of the tool carrier. The physical attachment features are mutually coupled as indicated by the coincidence in the images on the screen between the one or more viewable carrier connection completion target indicia image 616 and the display screen with the one or more viewable implement connection completion target indicia image 626.

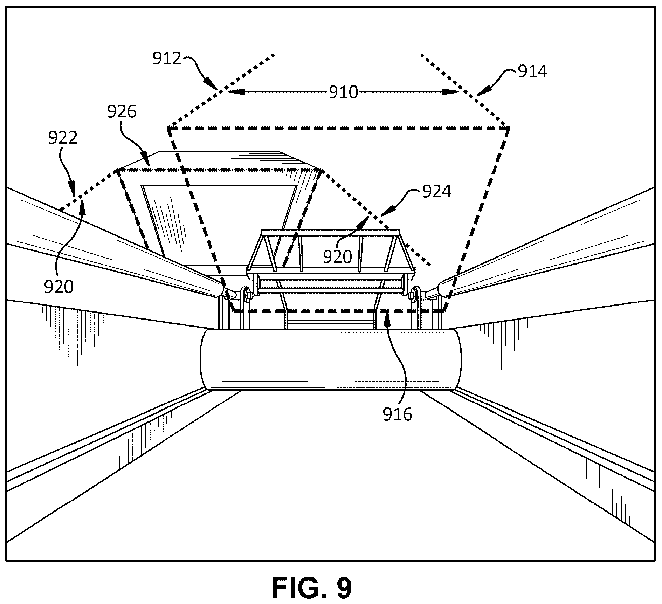

Fig. 9 is an illustration showing an image 900 of viewable guidance images displayed on a display unit for assisting an operator move a tractor carrying an implement coupled with a tool carrier of a loader relative to a target item in the form of a load for pre-engaging with the load using the implement. The display unit 130 is operable to display, based on the work area image data, the implement alignment guidance data, and the heading data, a viewable image 910 of the implement heading of an implement coupled with a tool carrier of the loader of the tractor, and a viewable image 920 of the load approach path in a viewable image of the work area, for assisting the movement of the implement on the loader to position the implement relative to an associated target item in the form of a load for engaging the load using the implement.

In addition and as shown, the display unit 130 is operable to display, based on load image data and alignment guidance data generated by the processor executing virtual guidance logic, the viewable image 920 of the load approach path superimposed on a viewable image of the load displayed on the screen. In addition, the display unit 130 is operable to display, based on implement image data and heading data generated by the processor executing virtual guidance logic, the viewable image 910 of the heading superimposed on a viewable image of the implement displayed on the screen. In accordance with an example embodiment, the viewable image 920 of the load approach path is displayed as an intermittent set of one or more non-continuous lines that turn persistent and solid to indicate proper alignment to/with the viewable image 910 of the implement heading. Likewise and in accordance with an example embodiment, the viewable image 910 of the implement heading may be displayed as an intermittent set of one or more non-continuous lines that turn persistent and solid to indicate proper alignment to/with the viewable image 920 of the load approach path.

The processor device 204 is operable to execute the virtual guidance logic 211 to generate approach path ray data based on the alignment guidance data, and heading ray data based on the heading data.

The display unit is operable to display, based on the implement image data and the approach path ray data, the viewable image of the implement approach path 920 as one or more viewable approach path ray images 922, 924 extending from the viewable image of the load displayed on the screen.

The display unit 130 is further operable to display, based on the implement image data and the heading ray data, the viewable image of the implement heading as one or more viewable implement heading ray images 912, 914 extending from the viewable image of the load displayed on the screen.

For assisting the operator position the implement coupled with the loader of the tractor relative to the load, an alignment on the screen of the one or more viewable load approach path ray images 922, 924 is displayed on the screen with the one or more viewable implement heading ray images 912, 914 displayed on the screen by the operator moving the associated tractor about a yaw axis (the Y-axis Fig. 1) of the tractor relative to the implement establishes an alignment between the carrier attachment feature of the tool carrier and the implement attachment feature of the implement for pre-staging mutual coupling therebetween. In accordance with an example embodiment, the one or more viewable load approach path ray images 922, 924 are displayed as an intermittent set of one or more non-continuous lines that turn persistent and solid to indicate proper alignment to/with the one or more viewable implement heading ray images 912, 914. Likewise and in accordance with an example embodiment, the one or more viewable implement heading ray images 912, 914 may be displayed as an intermittent set of one or more non-continuous lines that turn persistent and solid to indicate proper alignment to/with the one or more viewable load approach path ray images 922, 924.

The processor device 204 is operable to execute the virtual guidance logic 211 to generate implement connection completion target indicia data based on the alignment guidance data and the approach path ray data. The processor device 204 is further operable to execute the virtual guidance logic 211 to generate carrier connection completion target indicia data based on the heading data and the heading ray data. The processor device 204 is still further operable to execute the virtual guidance logic 211 to generate load engagement completion or placement completion target indicia data based on the load alignment guidance data and the load approach path ray data.

In addition, the display unit of the virtual assist apparatus according to the example embodiment is operable to display, based on the load image data and the load engagement or placement completion target indicia data, a viewable load placement completion target indicia image 926 defining a position along the one or more viewable approach path ray images 922, 924 representative of a load placement completion confirmation.

In further addition, the display unit is operable to display, based on the implement image data and the implement connection completion target indicia data, a viewable implement connection completion target indicia image 916 defining a position along the one or more viewable heading ray images 912, 914 representative of an implement connection completion confirmation. In accordance with an example embodiment, the load placement completion target indicia image 926 may be displayed as an intermittent set of one or more non-continuous shapes or forms such as a rectangle as shown or lines that turn persistent and solid to indicate proper alignment to/with the implement connection completion target indicia image 916. Likewise an in accordance with an example embodiment, the implement connection completion target indicia image 916 may be displayed as an intermittent set of one or more non-continuous shapes or forms such as a rectangle as shown or lines that turn persistent and solid to indicate proper alignment to/with the load placement completion target indicia image 926.

As shown in Fig. 9, there is no alignment on the screen of the one or more viewable approach path ray images 922, 924 with the one or more viewable heading ray images 912, 914. Accordingly, the operator must move the associated tractor about the yaw axis (the Y-axis Fig. 1) of the tractor relative to the implement in order to establish an alignment between the carrier attachment feature of the tool carrier and the implement attachment feature of the implement for pre-staging mutual coupling therebetween. The operator must also move the loader such as to lower the boom arms or the like.

In further addition, since the one or more viewable implement connection completion target indicia image 916 are not coincident on the display screen with the one or more viewable load placement completion target indicia image 926, the load engagement feature of the load is far from being mutually coupleable with a corresponding engagement feature of the implement. The physical attachment features are spaced apart as indicated by the distance between the one or more viewable implement connection completion target indicia image 916 and the display screen with the one or more viewable load placement completion target indicia image 926. In general, the display unit is operable to display, based on the load image data and the load placement completion target indicia data, a viewable load placement completion target indicia image defining a position along the one or more viewable load approach path ray images representative of a load placement completion confirmation, and the display unit is further operable to display, based on the implement image data and the implement connection completion target indicia data, a viewable implement engagement completion target indicia image defining a position along the one or more viewable implement heading ray images representative of an implement engagement completion confirmation, wherein a coincidence on the screen of the viewable load placement completion target indicia image displayed on the screen with the viewable implement engagement completion target indicia image displayed on the screen by the operator moving the implement carried on the tool carrier of the loader of the associated tractor towards the load is representative of a confirmation of the mutual engagement between the implement attachment feature of the implement with the load placement feature of the associated implement.

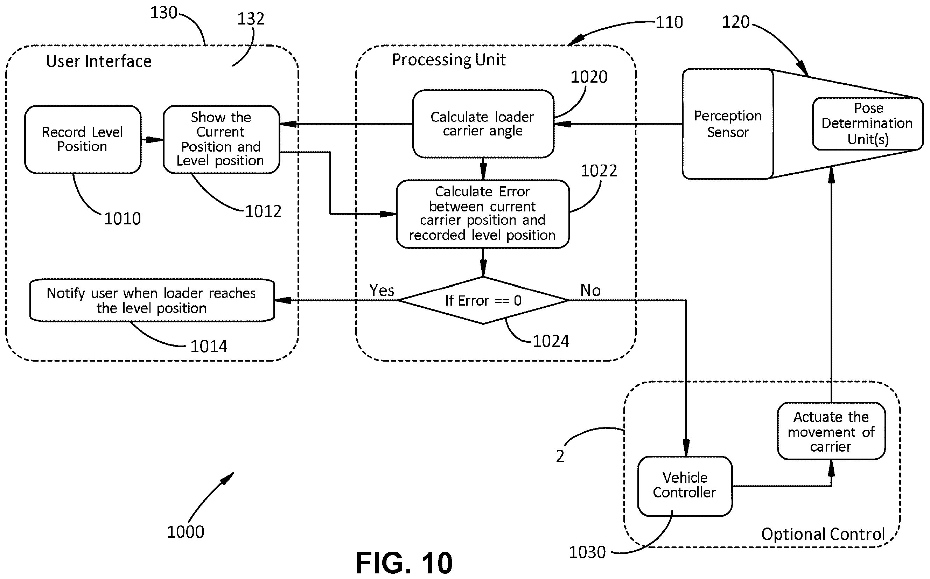

Fig. 10 illustrates a functional flow 1000 that provides implement height and level detection and control for performing work functions with the implements. Examiner embodiments herein are directed to methods and systems assisting an operator with implement height and level detection for performing work functions with the implements, including repeated work functions.

In addition and following attaching the implement 24 with the tool carrier 22, the virtual assist apparatus 100 provides assistance to an operator with regard to implement height and level detection for performing work functions with the implements, including repeated work functions, and training the system for return to position (RTP) operation or the like. The virtual assist apparatus 100 may function in an RTP mode to automatically return the boom 20 overall, portions of the boom 20 such as for example the lift arms 36, 38 and/or the implement arms 46, 48, the various attachments, tools or implements 24 when so carried on the tool carrier 22, to one or more pre-stored position(s) in response to operator input. It is to be appreciated that all of the above operations and movements may be performed prior to attaching any of the various work implements 24 with the tool carrier 22, during/while attaching any of the various work implements 24 with the tool carrier 22, and/or after attaching any of the various work implements 24 with the tool carrier 22.

The functional flow 1000 of the example embodiment providing implement height and level detection and control for performing work functions with the implements is advantageous relative to prior mechanical implement level indicators that are relatively inaccurate since their use is highly dependent on operator efficiency as operator needs to continuously monitor the level indicator rod which is a painful task while performing loader operations.

Accurately knowing the level of implement at different stages of operation without much operator intervention will enhance productivity as well as operator comfort. Moreover accurately knowing the level of the implement with respect to ground for specific operations (e.g. pallet loader in transport mode carrying a box) is essential from productivity, efficiency and safety perspective to avoid spillover etc. Vision based implement Level Indicator uses a perception sensor which will give the information about current implement level and it will be compared with reference value (e.g. ground plane) provided by the operator to generate error signal. Knowing the implement level will certainly be beneficial for operator to manually take corrective action. In addition, an automatic control can be provided using a controller which will act upon the error signal mentioned above to generate necessary corrective commands to quickly and accurately level the implement. This will also result in enhanced safety and work efficiency while operating the loader in automatic implement level control mode.

The example virtual guidance apparatus or controller 100 can send messages and receive data, including program code, through the network(s), network link 220 and communication interface 218. In an Internet-connected example embodiment, the virtual guidance apparatus or controller 100 is operatively connected with a plurality of external public, private, governmental or commercial servers (not shown) configured to execute a web application in accordance with example embodiments. The example virtual guidance apparatus or controller 100 suitably includes several subsystems or modules to perform the virtual operator's guidance as set forth herein. A benefit of the subject application is to provide improved guidance by displaying offset and inclination movement guidance instructions on a screen 132 of a display unit 130 that is viewable from an operator's seat of the associated work vehicle for helping the operator to view current positions of the loader and tool mechanisms as well as to visualize preferred or recommended movements of the loader and tool carrier mechanisms to safely and efficiently couple the tool carrier with a tool to safely and efficiently attach the tool onto the tool carrier portion of the loader. An output device 215 may also be provided such as in the form of a sound generating device such as a speaker to help improve guidance assistance by generating audible guidance instructions in the form of audible instructions and/or suitable instructional noises such as beeps, voice messages or the like that can be heard from an operator's seat of the associated work vehicle for helping the operator to be alerted to current positions of the mechanisms as well as to be audibly instructed of preferred or recommended paths for movement of the loader and/or tool carrier mechanisms to safely and efficiently load, unload, or otherwise couple the desired implement 24 with the tool carrier 22, and also to handle the material using the implement 24 received onto the carrier 22.

The example embodiment of the virtual guidance apparatus further includes an input device 214 operatively coupled with the guidance control unit. The input device 214 may be used during a training of the virtual guidance apparatus for receiving a boom and tool carrier level position training signal representative of the first predetermined target location alignment of the boom and tool carrier to establish a predetermined relative physical position between the implement carried on the tool carrier portion of the loader and the ground. In an example embodiment the input device 214 may include a touchscreen portion 134 of the display unit 130, a pointer device 216 operatively coupled with the guidance control unit, or any other device or means of communicating training and other information to the control unit 110 of the virtual guidance assist apparatus 100.

In an example embodiment during system training, the operator may first position the boom 20 and tool carrier 22 carrying an implement to a desired position that is level relative to the ground, then select a virtual level set point selection indicia that is displayed on the touchscreen 134 using a pointer or finger while the boom, tool carrier, and implement are in a desired position to dispose the implement level relative to the ground.

Further in an example embodiment, the operator may position the tool carrier 22 in a desired position relative to the boom 20, then drag and drop the virtual indicia movable on the touchscreen 134 onto a selected portion of the image of boom on the screen 132 while the tool carrier 22 is in a desired position relative to the boom 20, wherein the virtual indicia comprises the carrier position training signal representative of a selectable target location on the screen for alignment of the carrier target device in the viewable image of the loader to establish a desired relative physical position between the carrier portion of the boom and the vehicle, the ground supporting the associated work vehicle, and/or relative to the boom 20. In an example embodiment, the virtual indicia may be a crosshair for example. In a further example embodiment, the virtual indicia may be a visual symbol such as a logo, for example. In yet a further example, the virtual indicia may be a static image capture of the tool carrier 22 disposed in the desired position relative to the boom 20.

In an example embodiment, the operator moves the implement carried on the loader to a desired level position relative to the ground supporting the tractor. The optical system 120 receives an image of the loader and implement while the implement carried on the loader is held in the desired level position relative to the ground supporting the tractor. In this position, the operator may then select a virtual level set point selection indicia 1010 that is displayed on the touchscreen 134 using a pointer or finger while the boom, tool carrier, and implement are held in the desired position to dispose the implement level relative to the ground. The image of the loader and implement is thereby captured by the optical system 120 and stored as implement level set point data in the memory device 210 of the guidance control apparatus 110. In addition, the implement level set point data is displayed on the screen 132 as a loader image 1012.

Thereafter, the operator may move the loader and implement carried thereon using standard tractor control mechanisms, etc. When it is desired to move the implement to the level position the operator may select a level command indicia displayed on the screen 132 whereupon the processor of the guidance control apparatus 110 may execute the level and height logic 232 to calculate a loader carrier angle at 1020 and deliver the image data received from the optical system 120 to the display unit 130 for display at 1012 together with a display of the loader and implement set in the desired level position. The pair of loader and implement images may be displayed, for example, as mutual overlays for visualization by the tractor operator.

The processor of the guidance control apparatus 110 may further execute the level and height logic 232 to calculate at 1022 an error at 1022 between the current carrier position and the desired recorded carrier position.

If it is determined at 1024 that the error at 1022 between the current carrier position and the desired recorded carrier position is minimal, the user is notified at 1014 that the loader is at the desired position to realize the level between the implement and the ground.

If on the other hand it is determined at 1024 that the error at 1022 between the current carrier position and the desired recorded carrier position is substantial, a level control signal is generated for delivery to functional elements of the tractor 2. To that end, the virtual assist apparatus or controller 100 includes a communication interface 218 (Fig. 2) coupled with the bus 202 that provides a two-way data communication coupling to a network link 220 that is connected to local network 212 such as for example a local network of the work vehicle 1 such as a Controller Area Network (CAN) bus or the like. The communication interface 218 may be a controller area network (CAN) card to provide a data communication connection to a compatible CAN bus. As another example, communication interface 218 may be a local area network (LAN) card to provide a data communication connection to a compatible LAN of the vehicle 2.

The vehicle controller 1030 may react to the level control signal to actuate the one or more controlled devices of the tractor such as for example the lift cylinders 37, 39 coupled between the aft bracket set 30 and the mid bracket set 34 and/or the bucket cylinders 47, 49 coupled between the mid bracket set 34 and the forward bracket set 33 in order to move the loader and tool carrier to locate the implement in the desired level position.

It is to be understood that other embodiments will be utilized and structural and functional changes will be made without departing from the scope of the claims. The foregoing descriptions of embodiments have been presented for the purposes of illustration and description. It is not intended to be exhaustive or to limit the embodiments to the precise forms disclosed. Accordingly, many modifications and variations are possible in light of the above teachings. It is therefore intended that the scope of the claims not be limited by this detailed description.

## Claims

1. A virtual assist apparatus for assisting movement of a loader (10) carried on a tractor (2) to position the loader (10) relative to an associated target item (50) for mutually engaging the loader (10) with the target item, the virtual assist apparatus comprising:
an imaging system (120) operable to generate work area image data representative of an image of a work area adjacent to the tractor (2), wherein the work area image data comprises loader image data representative of an image of the loader (10) and target image data representative of an image of the associated target item (50) disposed in the work area;
a guidance control apparatus (110) coupled with the imaging system (120), the guidance control apparatus (110) comprising:
a processor device (204);
a non-transient memory device (210) operatively coupled with the processor device (204) and storing the work area image data; and
virtual guidance logic (211) stored in the memory device; and
a display unit (130) operatively coupled with the guidance control apparatus (110) and comprising a screen (132) that is viewable by an operator of the tractor (2), wherein the processor is operable to execute the virtual guidance logic (211) to generate, based on the work area image data:
tractor heading data representative of a tractor heading of the tractor (2), and target alignment guidance data representative of a target approach path providing access to a target attachment feature of the target that is mutually engageable with a corresponding loader attachment feature of the loader (10), wherein the display unit (130) is operable to display, based on the work area image data, the target alignment guidance data, and the tractor heading data, viewable images of the tractor heading and the target approach path in a viewable image of the work area, for assisting the movement of the tractor (2) to position the loader (10) relative to the associated target item (50) for mutually engaging the loader (10) with the associated target item (50), wherein the imaging system (120) is operable to generate the work area image data comprising tool carrier image data representative of an image of a tool carrier of the loader (10), and implement image data representative of an image of an associated implement disposed in the work area;
the processor is operable to execute the virtual guidance logic (211) to generate, based on the work area image data:
tool carrier heading data representative of a tool carrier heading of the tool carrier, and implement alignment guidance data representative of an implement approach path providing access to an implement attachment feature of the associated implement that is mutually coupleable with a corresponding carrier attachment feature of the tool carrier; and
the display unit (130) is operable to display, based on the work area image data, the implement alignment guidance data, and the tool carrier heading data, viewable images of the tool carrier heading and the implement approach path in the viewable image of the work area, for assisting the movement of the loader (10) to position the tool carrier relative to the associated implement for mutually coupling the tool carrier with the associated implement, wherein the processor device (204) is operable to execute the virtual guidance logic (211) to generate the implement alignment guidance data based on the implement image data;
the processor device (204) is operable to execute the virtual guidance logic (211) to generate the tool carrier heading data based on the tool carrier image data;
the display unit (130) is operable to display, based on the implement image data and the implement alignment guidance data, the viewable image of the implement approach path superimposed on a viewable image of the associated implement displayed on the screen; and
the display unit (130) is operable to display, based on the tool carrier image data and the tool carrier heading data, the viewable image of the tool carrier heading superimposed on a viewable image of the tool carrier displayed on the screen, **characterized in that** the virtual assist apparatus further comprising:
implement characteristic data stored in the memory device (210), the implement characteristic data being representative of a physical characteristic of the associated implement;
tool carrier characteristic data stored in the memory device (210), the tool carrier characteristic data being representative of a physical characteristic of the tool carrier; and
implement compatibility verification logic stored in the memory device (210),
wherein the processor is operable to execute the implement compatibility verification logic to determine, based on the implement characteristic data and the tool carrier characteristic data, implement compatibility between the tool carrier and the associated implement to mutually couple the tool carrier with the associated implement, and generate implement compatibility data based on determining the implement compatibility between the tool carrier and the associated implement to mutually couple the tool carrier with the associated implement,
wherein the display unit (130) is operable to display a viewable implement compatibility confirmation image, based on the determining the implement compatibility to confirm to the operator the determined implement compatibility between the tool carrier and the associated implement.

2. The virtual assist apparatus according to at least one of the preceding claims, wherein:
the guidance control apparatus (110) comprises an implement database stored in the memory device (210), the implement database comprising a first implement data set correlating a first implement type of a first associated implement with first implement attachment feature location data representative of one or more locations of one or more physical implement attachment features of the first associated implement, and a second implement data set correlating a second implement type of a second associated implement with second implement attachment feature location data representative of one or more locations of one or more physical implement attachment features of the second associated implement;
the guidance control apparatus (110) is operable to receive an implement identification signal, the implement identification signal being representative of an identity of the associated implement;
the processor device (204) is operable to execute the implement compatibility verification logic to:
select, based on the implement identification signal corresponding to a one of the first or second implement types, a corresponding one of the first or second implement data sets from the implement database as the implement characteristic data;
automatically determine, based on the implement characteristic data and the tool carrier characteristic data, the implement compatibility between the tool carrier and the associated implement to mutually couple the tool carrier with the associated implement; and
generate the implement compatibility data based on determining the implement compatibility between the tool carrier and the associated implement permitting mutually coupling the tool carrier with the implement.

3. The virtual assist apparatus according to at least one of the preceding claims, further comprising:
an operator interface operatively coupled with the guidance control apparatus (110), the operator interface being operable to receive an implement selection signal from an operator of the tractor (2), and to generate the implement identification signal corresponding to the received implement selection signal.

4. The virtual assist apparatus according to at least one of the preceding claims, wherein:
the processor is operable to execute the implement compatibility verification logic to:
detect, based on the implement image data, implement identification indicia carried on the implement;
determine the detected implement identification indicia being representative of a one of the first or second implement types;
select, based on the detected implement identification indicia being determined to be representative of a one of the first or second implement types, a corresponding one of the first or second implement data sets from the implement database; and
automatically determine, based on the implement image data and on the first or second implement attachment feature location data corresponding to the selected one of the first or second implement data sets, the implement compatibility between the tool carrier and the associated implement to mutually couple the tool carrier with the associated implement, and generate the implement compatibility data based on determining the implement compatibility between the tool carrier and the associated implement to mutually couple the tool carrier with the implement.

5. The virtual assist apparatus according to at least one of the preceding claims, wherein:
the logic stored in the memory device (210) comprises a deep learning implement detection model; and
the processor device (204) is operable to execute the deep learning implement detection model to automatically detect, based on the implement image data, the physical characteristic of the associated implement and store the detected physical characteristic of the associated implement in the memory device (210) as the implement characteristic data for determining the implement compatibility between the tool carrier and the associated implement to mutually couple the tool carrier with the implement.

6. The virtual assist apparatus according to at least one of the preceding claims, wherein:
the imaging system (120) is operable to generate the work area image data comprising implement image data representative of an image of an implement carried on an end of the loader (10), and load image data representative of an image of an associated load disposed in the work area;
the processor is operable to execute the virtual guidance logic (211) to generate, based on the work area image data:
implement heading data representative of an implement heading of the implement, and load alignment guidance data representative of a load approach path providing access to a load engagement feature of the associated load that is mutually coupleable with a corresponding carrier attachment feature of the tool carrier; and
the display unit (130) is operable to display, based on the work area image data, the load alignment guidance data, and the implement heading data, viewable images of the implement heading and the load path in the viewable image of the work area, for assisting the movement of the loader (10) to position the implement relative to the associated load for mutually engaging the implement with the associated load.

7. The virtual assist apparatus according to at least one of the preceding claims, wherein:
the processor device (204) is operable to execute the virtual guidance logic (211) to generate the load alignment guidance data based on the load image data;
the processor device (204) is operable to execute the virtual guidance logic (211) to generate the implement heading data based on the implement image data;
the display unit (130) is operable to display, based on the load image data and the load alignment guidance data, the viewable image of the load approach path superimposed on a viewable image of the associated load displayed on the screen; and
the display unit (130) is operable to display, based on the implement image data and the implement heading data, the viewable image of the implement heading superimposed on a viewable image of the implement displayed on the screen.

8. The virtual assist apparatus according to at least one of the preceding claims, wherein:
the processor device (204) is operable to execute the virtual guidance logic (211) to generate load approach path ray data based on the load alignment guidance data;
the processor device (204) is operable to execute the virtual guidance logic (211) to generate implement heading ray data based on the implement heading data;
the display unit (130) is operable to display, based on the load image data and the load approach path ray data, the viewable image of the load approach path as one or more viewable load approach path ray images extending from the viewable image of the load displayed on the screen;
the display unit (130) is operable to display, based on the implement image data and the implement heading ray data, the viewable image of the implement heading as one or more viewable implement heading ray images extending from the viewable image of the implement displayed on the screen; and
an alignment on the screen of the one or more viewable load approach path ray images displayed on the screen with the one or more viewable implement heading ray images displayed on the screen by the operator raising, lowering, and/or tilting the implement carried on the tool carrier and/or moving the tractor (2) about a yaw axis of the tractor (2) relative to the associated load establishes an alignment between the implement attachment feature of the implement and the load attachment feature of the associated load for pre-staging mutual engagement therebetween.

9. The virtual assist apparatus according to at least one of the preceding claims, further comprising:
load characteristic data stored in the memory device (210), the load characteristic data being representative of a physical characteristic of the associated load;
implement characteristic data stored in the memory device (210), the implement characteristic data being representative of a physical characteristic of the implement; and
load compatibility verification logic stored in the memory device (210),
wherein the processor is operable to execute the load compatibility verification logic to determine, based on the load characteristic data and the implement characteristic data, a load compatibility between the implement and the associated load to mutually engage the implement with the associated load, and generate load compatibility data based on determining the load compatibility between the implement and the associated load to mutually engage the implement with the associated load,
wherein the display unit (130) is operable to display a viewable load confirmation image, based on the determining the load compatibility to confirm to the operator the determined load compatibility between the implement and the associated load.

10. The virtual assist apparatus according to at least one of the preceding claims, wherein:
the guidance control apparatus (110) comprises a load database stored in the memory device (210), the load database comprising a first load data set correlating a first load type of a first associated load with first load engagement feature location data representative of one or more locations of one or more physical load engagement features of the first associated load, and a second load data set correlating a second load type of a second associated load with second load engagement feature location data representative of one or more locations of one or more physical load engagement features of the second associated load;
the guidance control apparatus (110) is operable to receive a load identification signal, the load identification signal being representative of an identity of the associated load;
the processor device (204) is operable to execute the load compatibility verification logic to:
select, based on the load identification signal corresponding to a one of the first or second load types, a corresponding one of the first or second load data sets from the load database as the load characteristic data;
automatically determine, based on the load characteristic data and the implement characteristic data, the load compatibility between the implement and the associated load to mutually engage the implement with the implement; and
generate the load compatibility data based on determining the load compatibility between the implement and the associated load to mutually engage the implement with the associated load.

11. The virtual assist apparatus according to at least one of the preceding claims, further comprising:
an operator interface operatively coupled with the guidance control apparatus (110), the operator interface being operable to receive a load selection signal from an operator of the tractor (2), and to generate the load identification signal corresponding to the received load selection signal.

12. The virtual assist apparatus according to at least one of the preceding claims, wherein:
the processor is operable to execute the load compatibility verification logic to:
detect, based on the load image data, load identification indicia carried on the load;
determine the detected load identification indicia being representative of a one of the first or second implement types;
select, based on the detected load identification indicia being determined to be representative of a one of the first or second load types, a corresponding one of the first or second load data sets from the load database; and
automatically determine, based on the load image data and on the first or second load engagement feature location data corresponding to the selected one of the first or second load data sets, the load compatibility between the implement and the associated load to mutually engage the implement with the associated load, and generate the load compatibility data based on determining the load compatibility between the implement and the associated load to mutually engage the implement with the associated load.

## Patentansprüche

1. Virtuelles Hilfsgerät zur Unterstützung der Bewegung eines Ladegeräts (10), das auf einem Traktor (2) getragen wird, um das Ladegerät (10) relativ zu einem assoziierten Zielobjekt (50) zum wechselseitigen Eingreifen des Ladegeräts (10) mit dem Zielobjekt zu positionieren, wobei das virtuelle Hilfsgerät Folgendes umfasst:
ein Bildgebungssystem (120), das betreibbar ist zum Erzeugen von Arbeitsbereichsbilddaten, die für ein Bild eines Arbeitsbereichs angrenzend an den Traktor (2) repräsentativ sind, wobei die Arbeitsbereichsbilddaten Ladegerätbilddaten, die für ein Bild des Ladegeräts (10) repräsentativ sind, und Zielbilddaten, die für ein Bild des assoziierten Zielelements (50) repräsentativ sind, das in dem Arbeitsbereich angeordnet ist, umfassen;
eine Führungssteuereinrichtung (110), die mit dem Bildgebungssystem (120) gekoppelt ist, wobei die Führungssteuereinrichtung (110) Folgendes umfasst:
eine Prozessoreinrichtung (204);
eine nichtflüchtige Speichervorrichtung (210), die operativ mit der Prozessorvorrichtung (204) gekoppelt ist und die Arbeitsbereichsbilddaten speichert; und
eine virtuelle Führungslogik (211), die in der Speichervorrichtung gespeichert ist; und
eine Anzeigeeinheit (130), die operativ mit der Führungssteuereinrichtung (110) gekoppelt ist und einen Bildschirm (132) umfasst, der für einen Bediener des Traktors (2) sichtbar ist, wobei der Prozessor betreibbar ist zum Ausführen der virtuellen Führungslogik (211), um basierend auf den Arbeitsbereichsbilddaten Folgendes zu erzeugen:
Traktorkursdaten, die für einen Traktorkurs des Traktors (2) repräsentativ sind, und Zielausrichtungsführungsdaten, die für einen Zielannäherungspfad repräsentativ sind, der Zugriff auf ein Zielbefestigungsmerkmal des Ziels bereitstellt, das wechselseitig mit einem entsprechenden Ladegerätbefestigungsmerkmal des Ladegeräts (10) in Eingriff bringbar ist, wobei die Anzeigeeinheit (130) betreibbar ist zum Anzeigen, basierend auf den Arbeitsbereichsbilddaten, den Zielausrichtungsführungsdaten und den Traktorkursdaten, betrachtbarer Bilder des Traktorkurses und des Zielannäherungspfades in einem betrachtbaren Bild des Arbeitsbereichs, um die Bewegung des Traktors (2) zu unterstützen, um das Ladegerät (10) relativ zu dem assoziierten Zielelement (50) zu positionieren, um das Ladegerät (10) mit dem assoziierten Zielelement (50) wechselseitig in Eingriff zu bringen, wobei das Bildgebungssystem (120) betreibbar ist zum Erzeugen der Arbeitsbereichsbilddaten, die Werkzeugträgerbilddaten, die für ein Bild eines Werkzeugträgers des Ladegeräts (10) repräsentativ sind, und Arbeitsgerätebilddaten, die für ein Bild eines assoziierten Arbeitsgeräts repräsentativ sind, das in dem Arbeitsbereich angeordnet ist, umfassen;
der Prozessor betreibbar ist zum Ausführen der virtuellen Führungslogik (211), um basierend auf den Arbeitsbereichsbilddaten Folgendes zu erzeugen:
Werkzeugträgerkursdaten, die für einen Werkzeugträgerkurs des Werkzeugträgers repräsentativ sind, und Arbeitsgeräteausrichtungsführungsdaten, die für einen Arbeitsgeräteannäherungspfad repräsentativ sind, der Zugang zu einem Arbeitsgerätebefestigungsmerkmal des assoziierten Arbeitsgeräts bereitstellt, das wechselseitig mit einem entsprechenden Trägerbefestigungsmerkmal des Werkzeugträgers koppelbar ist; und
wobei die Anzeigeeinheit (130) betreibbar ist zum Anzeigen, basierend auf den Arbeitsbereichsbilddaten, den Arbeitsgeräteausrichtungsführungsdaten und den Werkzeugträgerkursdaten, betrachtbarer Bilder des Werkzeugträgerkurses und des Arbeitsgeräteannäherungspfads in dem betrachtbaren Bild des Arbeitsbereichs, um die Bewegung des Ladegeräts (10) zu unterstützen, um den Werkzeugträger relativ zu dem assoziierten Arbeitsgerät zum wechselseitigen Koppeln des Werkzeugträgers mit dem assoziierten Arbeitsgerät zu positionieren, wobei die Prozessorvorrichtung (204) betreibbar ist zum Ausführen der virtuellen Führungslogik (211), um die Arbeitsgeräteausrichtungsführungsdaten basierend auf den Arbeitsgerätebilddaten zu erzeugen;
wobei die Prozessorvorrichtung (204) betreibbar ist zum Ausführen der virtuellen Führungslogik (211), um die Werkzeugträgerkursdaten basierend auf den Werkzeugträgerbilddaten zu erzeugen;
wobei die Anzeigeeinheit (130) betreibbar ist zum Anzeigen, basierend auf den Arbeitsgerätebilddaten und den Arbeitsgeräteausrichtungsführungsdaten, des betrachtbaren Bildes des Arbeitsgeräteannäherungspfads, das einem betrachtbaren Bild des assoziierten Arbeitsgeräts überlagert ist, das auf dem Bildschirm angezeigt wird; und
wobei die Anzeigeeinheit (130) betreibbar ist zum Anzeigen, basierend auf den Werkzeugträgerbilddaten und den Werkzeugträgerkursdaten, des betrachtbaren Bildes des Werkzeugträgerkurses, das einem betrachtbaren Bild des auf dem Bildschirm angezeigten Werkzeugträgers überlagert ist, **dadurch gekennzeichnet, dass** das virtuelle Hilfsgerät ferner Folgendes umfasst:
in der Speichervorrichtung (210) gespeicherte Arbeitsgerätekenndaten, wobei die Arbeitsgerätekenndaten für eine physische Charakteristik des assoziierten Arbeitsgeräts repräsentativ sind;
Werkzeugträgerkenndaten, die in der Speichereinrichtung (210) gespeichert sind, wobei die Werkzeugträgerkenndaten für eine physische Charakteristik des Werkzeugträgers repräsentativ sind; und
Arbeitsgerätekompatibilitätsverifizierungslogik, die in der Speichervorrichtung (210) gespeichert ist,
wobei der Prozessor betreibbar ist zum Ausführen der Arbeitsgerätekompatibilitätsverifizierungslogik, um basierend auf den Arbeitsgerätekenndaten und den Werkzeugträgerkenndaten eine Arbeitsgerätekompatibilität zwischen dem Werkzeugträger und dem assoziierten Arbeitsgerät zu bestimmen, um den Werkzeugträger mit dem assoziierten Arbeitsgerät wechselseitig zu koppeln, und
Erzeugen von Arbeitsgerätekompatibilitätsdaten basierend auf dem Bestimmen der Arbeitsgerätekompatibilität zwischen dem Werkzeugträger und dem assoziierten Arbeitsgerät, um den Werkzeugträger mit dem assoziierten Arbeitsgerät wechselseitig zu koppeln,
wobei die Anzeigeeinheit (130) betreibbar ist zum Anzeigen eines sichtbaren Arbeitsgerätekompatibilitätsbestätigungsbildes basierend auf dem Bestimmen der Arbeitsgerätekompatibilität, um dem Bediener die bestimmte Arbeitsgerätekompatibilität zwischen dem Werkzeugträger und dem assoziierten Arbeitsgerät zu bestätigen.

2. Virtuelles Hilfsgerät nach mindestens einem der vorhergehenden Ansprüche, wobei:
die Führungssteuereinrichtung (110) eine in der Speichervorrichtung (210) gespeicherte Arbeitsgerätedatenbank umfasst, wobei die Arbeitsgerätedatenbank einen ersten Arbeitsgerätedatensatz, der einen ersten Arbeitsgerätetyp eines ersten assoziierten Arbeitsgeräts mit ersten Arbeitsgerätebefestigungsmerkmalspositionsdaten korreliert, die für eine oder mehrere Positionen eines oder mehrerer physischer Arbeitsgerätebefestigungsmerkmale des ersten assoziierten Arbeitsgeräts repräsentativ sind, und einen zweiten Arbeitsgerätedatensatz, der einen zweiten Arbeitsgerätetyp eines zweiten assoziierten Arbeitsgeräts mit zweiten Arbeitsgerätebefestigungsmerkmalspositionsdaten korreliert, die für eine oder mehrere Positionen eines oder mehrerer physischer Arbeitsgerätebefestigungsmerkmale des zweiten assoziierten Arbeitsgeräts repräsentativ sind, umfasst;
die Führungssteuereinrichtung (110) betreibbar ist zum Empfangen eines Arbeitsgeräteidentifizierungssignals, wobei das Arbeitsgeräteidentifizierungssignal für eine Identität des assoziierten Arbeitsgeräts repräsentativ ist;
die Prozessorvorrichtung (204) betreibbar ist zum Ausführen der Arbeitsgerätekompatibilitätsverifizierungslogik zum:
Auswählen, basierend auf dem Arbeitsgeräteidentifizierungssignal, das einem aus dem ersten oder dem zweiten Arbeitsgerätetyp entspricht, eines entsprechenden aus dem ersten oder zweiten Arbeitsgerätedatensatz aus der Arbeitsgerätedatenbank als die Arbeitsgerätekenndaten;
automatischen Bestimmen, basierend auf den Arbeitsgerätekenndaten und den Werkzeugträgerkenndaten, der Arbeitsgerätekompatibilität zwischen dem Werkzeugträger und dem assoziierten Arbeitsgerät, um den Werkzeugträger mit dem assoziierten Arbeitsgerät wechselseitig zu koppeln; und
Erzeugen der Arbeitsgerätekompatibilitätsdaten basierend auf dem Bestimmen der Arbeitsgerätekompatibilität zwischen dem Werkzeugträger und dem assoziierten Arbeitsgerät, wodurch ein wechselseitiges Koppeln des Werkzeugträgers mit dem Arbeitsgerät ermöglicht wird.

3. Virtuelles Hilfsgerät nach mindestens einem der vorhergehenden Ansprüche, ferner umfassend:
eine Bedienerschnittstelle, die operativ mit der Führungssteuereinrichtung (110) gekoppelt ist, wobei die Bedienerschnittstelle betreibbar ist zum Empfangen eines Arbeitsgeräteauswahlsignals von einem Bediener des Traktors (2) und Erzeugen des Arbeitsgeräteidentifizierungssignals, das dem empfangenen Arbeitsgeräteauswahlsignal entspricht.

4. Virtuelles Hilfsgerät nach mindestens einem der vorhergehenden Ansprüche, wobei:
der Prozessor betreibbar ist zum Ausführen der Arbeitsgerätekompatibilitätsverifizierungslogik zum:
Detektieren, basierend auf den Arbeitsgerätebilddaten, von auf dem Arbeitsgerät getragenen Arbeitsgeräteidentifizierungszeichen;
Bestimmen der detektierten Arbeitsgeräteidentifizierungszeichen, die für einen aus dem ersten oder zweiten Arbeitsgerätetyp repräsentativ sind;
Auswählen, basierend darauf, dass bestimmt wird, dass die detektierten Arbeitsgeräteidentifizierungszeichen für einen aus dem ersten oder zweiten Arbeitsgerätetyp repräsentativ sind, eines entsprechenden aus dem ersten oder zweiten Arbeitsgerätedatensatz aus der Arbeitsgerätedatenbank; und
automatischen Bestimmen, basierend auf den Arbeitsgerätebilddaten und den ersten oder zweiten Arbeitsgerätebefestigungsmerkmalspositionsdaten, die dem ausgewählten einen aus dem ersten oder zweiten Arbeitsgerätedatensatz entsprechen, der Arbeitsgerätekompatibilität zwischen dem Werkzeugträger und dem assoziierten Arbeitsgerät, um den Werkzeugträger mit dem assoziierten Arbeitsgerät wechselseitig zu koppeln, und Erzeugen der Gerätekompatibilitätsdaten basierend auf dem Bestimmen der Gerätekompatibilität zwischen dem Werkzeugträger und dem assoziierten Arbeitsgerät, um den Werkzeugträger mit dem Arbeitsgerät wechselseitig zu koppeln.

5. Virtuelles Hilfsgerät nach mindestens einem der vorhergehenden Ansprüche, wobei:
die in der Speichervorrichtung (210) gespeicherte Logik ein Tiefes-Lernen-Arbeitsgerätedetektionsmodell umfasst; und
die Prozessorvorrichtung (204) betreibbar ist zum Ausführen des Tiefes-Lernen-Arbeitsgerätedetektionsmodells, um basierend auf den Arbeitsgerätebilddaten automatisch die physische Charakteristik des assoziierten Arbeitsgeräts zu detektieren und die detektierte physische Charakteristik des assoziierten Arbeitsgeräts in der Speichervorrichtung (210) als die Arbeitsgerätekenndaten zum Bestimmen der Abeitsgerätekompatibilität zwischen dem Werkzeugträger und dem assoziierten Arbeitsgerät zu speichern, um den Werkzeugträger wechselseitig mit dem Arbeitsgerät zu koppeln.

6. Virtuelles Hilfsgerät nach mindestens einem der vorhergehenden Ansprüche, wobei:
das Bildgebungssystem (120) betreibbar ist zum Erzeugen der Arbeitsbereichsbilddaten, die Arbeitsgerätebilddaten umfassen, die für ein Bild eines Arbeitsgeräts repräsentativ sind, das an einem Ende des Ladegeräts (10) getragen wird, und Laden von Bilddaten, die für ein Bild einer assoziierten Last repräsentativ sind, die in dem Arbeitsbereich angeordnet ist;
der Prozessor betreibbar ist zum Ausführen der virtuellen Führungslogik (211), um basierend auf den Arbeitsbereichsbilddaten Folgendes zu erzeugen:
Arbeitsgerätekursdaten, die für einen Arbeitsgerätekurs des Arbeitsgeräts repräsentativ sind, und Lastausrichtungsführungsdaten, die für einen Lastannäherungspfad repräsentativ sind, der Zugang zu einem Lasteingriffsmerkmal der assoziierten Last bereitstellt, die wechselseitig mit einem entsprechenden Trägerbefestigungsmerkmal des Werkzeugträgers koppelbar ist; und
die Anzeigeeinheit (130) betreibbar ist zum Anzeigen, basierend auf den Arbeitsbereichsbilddaten, den Lastausrichtungsführungsdaten und den Arbeitsgerätekursdaten, betrachtbarer Bilder des Arbeitsgerätekurses und des Lastpfads in dem betrachtbaren Bild des Arbeitsbereichs, um die Bewegung des Ladegeräts (10) zu unterstützen, um das Arbeitsgerät relativ zu der assoziierten Last zu positionieren, um das Arbeitsgerät mit der assoziierten Last wechselseitig in Eingriff zu bringen.

7. Virtuelles Hilfsgerät nach mindestens einem der vorhergehenden Ansprüche, wobei:
die Prozessorvorrichtung (204) betreibbar ist zum Ausführen der virtuellen Führungslogik (211), um die Lastausrichtungsführungsdaten basierend auf den Lastbilddaten zu erzeugen;
die Prozessorvorrichtung (204) betreibbar ist zum Ausführen der virtuellen Führungslogik (211), um die Arbeitsgerätesteuerungsdaten basierend auf den Arbeitsgerätebilddaten zu erzeugen;
die Anzeigeeinheit (130) betreibbar ist zum Anzeigen, basierend auf den Lastbilddaten und den Lastausrichtungsführungsdaten, des betrachtbaren Bildes des Lastannäherungspfads, das einem betrachtbaren Bild der assoziierten Last überlagert ist, die auf dem Bildschirm angezeigt wird; und
die Anzeigeeinheit (130) betreibbar ist zum Anzeigen, basierend auf den Arbeitsgerätebilddaten und den Arbeitsgerätekursdaten, des betrachtbaren Bildes des Arbeitsgerätekurses, der einem auf dem Bildschirm angezeigten betrachtbaren Bild des Arbeitsgeräts überlagert ist.

8. Virtuelles Hilfsgerät nach mindestens einem der vorhergehenden Ansprüche, wobei:
die Prozessorvorrichtung (204) betreibbar ist zum Ausführen der virtuellen Führungslogik (211), um Lastannäherungspfadstrahldaten basierend auf den Lastausrichtungsführungsdaten zu erzeugen;
die Prozessorvorrichtung (204) betreibbar ist zum Ausführen der virtuellen Führungslogik (211), um Arbeitsgerätekursstrahldaten basierend auf den Arbeitsgerätekursdaten zu erzeugen;
die Anzeigeeinheit (130) betreibbar ist zum Anzeigen, basierend auf den Lastbilddaten und den Lastannäherungspfadstrahldaten, des betrachtbaren Bildes des Lastannäherungspfads als ein oder mehrere betrachtbare Lastannäherungspfadstrahlbilder, die sich von dem auf dem Bildschirm angezeigten betrachtbaren Bild der Last erstrecken;
die Anzeigeeinheit (130) betreibbar ist zum Anzeigen, basierend auf den Arbeitsgerätebilddaten und den Arbeitsgerätekursstrahldaten, des betrachtbaren Bildes des Arbeitsgerätekurses als ein oder mehrere betrachtbare Arbeitsgerätekursstrahlbilder, die sich von dem betrachtbaren Bild des auf dem Bildschirm angezeigten Arbeitsgeräts erstrecken; und
wobei eine Ausrichtung des einen oder der mehreren auf dem Bildschirm angezeigten betrachtbaren Lastannäherungspfadstrahlbilder mit dem einen oder den mehreren auf dem Bildschirm angezeigten betrachtbaren Arbeitsgerätekursstrahlbildern, indem der Bediener das auf dem Werkzeugträger getragene Arbeitsgerät anhebt, absenkt und/oder kippt, und/oder den Traktor (2) um eine Gierachse des Traktors (2) relativ zu der zugehörigen Last bewegt, eine Ausrichtung zwischen dem Arbeitsgerätebefestigungsmerkmal des Arbeitsgeräts und dem Lastbefestigungsmerkmal der zugehörigen Last zum vorstufigen wechselseitigen Eingriff zwischen diesen herstellt.

9. Virtuelles Hilfsgerät nach mindestens einem der vorhergehenden Ansprüche, ferner umfassend:
in der Speichervorrichtung (210) gespeicherte Lastkenndaten, wobei die Lastkenndaten für eine physische Charakteristik der assoziierten Last repräsentativ sind; Arbeitsgerätekenndaten, die in der Speichervorrichtung (210) gespeichert sind, wobei die Arbeitsgerätekenndaten für eine physische Charakteristik des Arbeitsgeräts repräsentativ sind; und
Lastkompatibilitätsverifizierungslogik, die in der Speichervorrichtung (210) gespeichert ist,
wobei der Prozessor betreibbar ist zum Ausführen der Lastkompatibilitätsverifizierungslogik, um basierend auf den Lastkenndaten und den Arbeitsgerätekenndaten eine Lastkompatibilität zwischen dem Arbeitsgerät und der assoziierten Last zu bestimmen, um das Gerät wechselseitig mit der assoziierten Last in Eingriff zu bringen, und Lastkompatibilitätsdaten basierend auf dem Bestimmen der Lastkompatibilität zwischen dem Arbeitsgerät und der assoziierten Last zu erzeugen, um das Arbeitsgerät wechselseitig mit der assoziierten Last in Eingriff zu bringen,
wobei die Anzeigeeinheit (130) betreibbar ist zum Anzeigen eines sichtbaren Lastbestätigungsbildes basierend auf dem Bestimmen der Lastkompatibilität, um dem Bediener die bestimmte Lastkompatibilität zwischen dem Arbeitsgerät und der assoziierten Last zu bestätigen.

10. Virtuelles Hilfsgerät nach mindestens einem der vorhergehenden Ansprüche, wobei:
die Führungssteuereinrichtung (110) eine in der Speichervorrichtung (210) gespeicherte Lastdatenbank umfasst, wobei die Lastdatenbank einen ersten Lastdatensatz, der einen ersten Lasttyp einer ersten assoziierten Last mit ersten Lasteingriffsmerkmalspositionsdaten korreliert, die für eine oder mehrere Positionen eines oder mehrerer physischer Lasteingriffsmerkmale der ersten assoziierten Last repräsentativ sind, und einen zweiten Lastdatensatz, der einen zweiten Lasttyp einer zweiten assoziierten Last mit zweiten Lasteingriffsmerkmalspositionsdaten korreliert, die für eine oder mehrere Positionen eines oder mehrerer physischer Lasteingriffsmerkmale der zweiten assoziierten Last repräsentativ sind, umfasst;
die Führungssteuereinheit (110) betreibbar ist zum Empfangen eines Lastidentifizierungssignals, wobei das Lastidentifizierungssignal für eine Identität der assoziierten Last repräsentativ ist;
die Prozessorvorrichtung (204) betreibbar ist zum Ausführen der Lastkompatibilitätsverifizierungslogik zum:
Auswählen, basierend auf dem Lastidentifizierungssignal, das einem aus dem ersten oder zweiten Lasttyp entspricht, eines entsprechenden aus dem ersten oder zweiten Lastdatensatz aus der Lastdatenbank als die Lastkenndaten;
automatischen Bestimmen, basierend auf den Lastkenndaten und den Arbeitsgerätekenndaten der Lastkompatibilität zwischen dem Arbeitsgerät und der assoziierten Last, um das Arbeitsgerät mit dem Arbeitsgerät wechselseitig in Eingriff zu bringen; und
Erzeugen der Lastkompatibilitätsdaten basierend auf dem Bestimmen der Lastkompatibilität zwischen dem Arbeitsgerät und der assoziierten Last, um das Arbeitsgerät mit der assoziierten Last wechselseitig in Eingriff zu bringen.

11. Virtuelles Hilfsgerät nach mindestens einem der vorhergehenden Ansprüche, ferner umfassend:
eine Bedienerschnittstelle, die operativ mit der Führungssteuereinrichtung (110) gekoppelt ist, wobei die Bedienerschnittstelle betreibbar ist zum Empfangen eines Lastauswahlsignals von einem Bediener des Traktors (2) und Erzeugen des Lastidentifizierungssignals, das dem empfangenen Lastauswahlsignal entspricht.

12. Virtuelles Hilfsgerät nach mindestens einem der vorhergehenden Ansprüche, wobei:
der Prozessor betreibbar ist zum Ausführen der Lastkompatibilitätsverifizierungslogik zum:
Detektieren, basierend auf den Lastbilddaten, von auf der Last getragenen Lastidentifizierungszeichen;
Bestimmen der detektierten Lastidentifizierungszeichen, die für einen aus dem ersten oder zweiten Arbeitsgerätetyp repräsentativ sind;
Auswählen, basierend darauf, dass bestimmt wird, dass die detektierten Lastidentifizierungszeichen für einen aus dem ersten oder zweiten Lasttyp repräsentativ sind, eines entsprechenden aus dem ersten oder zweiten Lastdatensatz aus der Lastdatenbank; und
automatischen Bestimmen, basierend auf den Lastbilddaten und den ersten oder zweiten Lasteingriffsmerkmalspositionsdaten, die dem ausgewählten einen aus dem ersten oder zweiten Lastdatensatz entsprechen, der Lastkompatibilität zwischen dem Arbeitsgerät und der assoziierten Last, um das Arbeitsgerät mit der assoziierten Last wechselseitig in Eingriff zu bringen, und Erzeugen der Lastkompatibilitätsdaten basierend auf dem Bestimmen der Lastkompatibilität zwischen dem Arbeitsgerät und der assoziierten Last, um das Arbeitsgerät mit der assoziierten Last wechselseitig in Eingriff zu bringen.

## Revendications

1. Appareil d'aide virtuelle pour aider un mouvement d'un chargeur (10) porté sur un tracteur (2) pour positionner le chargeur (10) relativement à un article cible associé (50) pour mettre mutuellement en prise le chargeur (10) avec l'article cible, l'appareil d'aide virtuelle comprenant :
un système d'imagerie (120) pouvant être mis en opération pour générer des données d'image de zone de travail représentatives d'une image d'une zone de travail adjacente au tracteur (2), dans lequel les données d'image de zone de travail comprennent des données d'image de chargeur représentatives d'une image du chargeur (10) et des données d'image cible représentatives d'une image de l'article cible associé (50) disposé dans la zone de travail ;
un appareil de commande de guidage (110) couplé au système d'imagerie (120), l'appareil de commande de guidage (110) comprenant :
un dispositif processeur (204) ;
un dispositif mémoire non transitoire (210) couplé opérationnellement au dispositif processeur (204) et stockant les données d'image de zone de travail ; et
une logique de guidage virtuel (211) stockée dans le dispositif mémoire ; et
une unité d'affichage (130) couplée opérationnellement à l'appareil de commande de guidage (110) et comprenant un écran (132) qui peut être vu par un opérateur du tracteur (2), dans lequel le processeur peut être mis en opération pour exécuter la logique de guidage virtuel (211) pour générer, sur la base des données d'image de zone de travail :
des données de direction de tracteur représentatives d'une direction de tracteur du tracteur (2), et des données de guidage d'alignement cible représentatives d'un trajet d'approche cible fournissant l'accès à un organe d'attache cible de la cible qui peut être mis mutuellement en prise avec un organe d'attache de chargeur correspondant du chargeur (10), dans lequel l'unité d'affichage (130) peut être mise en opération pour afficher, sur la base des données d'image de zone de travail, des données de guidage d'alignement cible,
et des données de direction de tracteur, des images pouvant être vues de la direction de tracteur et du trajet d'approche cible dans une image pouvant être vue de la zone de travail, pour aider le mouvement du tracteur (2) pour positionner le chargeur (10) relativement à l'article cible associé (50) pour mettre mutuellement en prise le chargeur (10) avec l'article cible associé (50),
dans lequel le système d'imagerie (120) peut être mis en opération pour générer les données d'image de zone de travail comprenant des données d'image de porte-outil représentatives d'une image d'un porte-outil du chargeur (10), et des données d'image d'outil représentatives d'une image d'un outil associé disposé dans la zone de travail ;
le processeur peut être mis en opération pour exécuter la logique de guidage virtuel (211) pour générer, sur la base des données d'image de zone de travail :
des données de direction de porte-outil représentatives d'une direction de porte-outil du porte-outil, et des données de guidage d'alignement d'outil représentatives d'un chemin d'approche d'outil fournissant l'accès à un organe d'attache d'outil de l'outil associé qui est couplable mutuellement à un organe d'attache de porte-outil correspondant du porte-outil ; et
l'unité d'affichage (130) peut être mise en opération pour afficher, sur la base des données d'image de zone de travail, des données de guidage d'alignement d'outil, et des données de direction de porte-outil, des images pouvant être vues de la direction de porte-outil et du chemin d'approche d'outil dans l'image pouvant être vue de la zone de travail, pour aider le mouvement du chargeur (10) pour positionner le porte-outil relativement à l'outil associé pour coupler mutuellement le porte-outil à l'outil associé, dans lequel le dispositif processeur (204) peut être mis en opération pour exécuter la logique de guidage virtuel (211) pour générer les données de guidage d'alignement d'outil sur la base des données d'image d'outil ;
le dispositif processeur (204) peut être mis en opération pour exécuter la logique de guidage virtuel (211) pour générer les données de direction de porte-outil sur la base des données d'image de porte-outil ;
l'unité d'affichage (130) peut être mise en opération pour afficher, sur la base des données d'image d'outil et des données de guidage d'alignement d'outil, l'image pouvant être vue du chemin d'approche d'outil superposé sur une image pouvant être vue de l'outil associé affichée sur l'écran ; et
l'unité d'affichage (130) peut être mise en opération pour afficher, sur la base des données d'image de porte-outil et des données de direction de porte-outil, l'image pouvant être vue de la direction de porte-outil superposée sur une image pouvant être vue du porte-outil affichée sur l'écran, **caractérisé en ce que** l'appareil d'aide virtuelle comprenant en outre :
des données de caractéristique d'outil stockées dans le dispositif mémoire (210), les données de caractéristique d'outil étant représentatives d'une caractéristique physique de l'outil associé ;
des données de caractéristique de porte-outil stockées dans le dispositif mémoire (210), les données de caractéristique de porte-outil étant représentatives d'une caractéristique physique du porte-outil ; et
une logique de vérification de compatibilité d'outil stockée dans le dispositif mémoire (210),
dans lequel le processeur peut être mis en opération pour exécuter la logique de vérification de compatibilité d'outil pour déterminer, sur la base des données de caractéristique d'outil et des données de caractéristique de porte-outil, une compatibilité d'outil entre le porte-outil et l'outil associé pour coupler mutuellement le porte-outil à l'outil associé, et générer des données de compatibilité d'outil sur la base de la détermination de la compatibilité d'outil entre le porte-outil et l'outil associé pour coupler mutuellement le porte-outil à l'outil associé,
dans lequel l'unité d'affichage (130) peut être mise en opération pour afficher une image pouvant être vue de confirmation de compatibilité d'outil, sur la base de la détermination de la compatibilité d'outil pour confirmer, à l'opérateur, la compatibilité d'outil déterminée entre le porte-outil et l'outil associé.

2. Appareil d'aide virtuelle selon au moins l'une des revendications précédentes, dans lequel :
l'appareil de commande de guidage (110) comprend une base de données d'outil stockée dans le dispositif mémoire (210), la base de données d'outil comprenant un premier ensemble de données d'outil corrélant un premier type d'outil d'un premier outil associé avec des premières données d'emplacement d'organe d'attache d'outil représentatives d'un ou de plusieurs emplacements d'un ou de plusieurs organes physiques d'attache d'outil du premier outil associé, et un second ensemble de données d'outil corrélant un second type d'outil d'un second outil associé avec des secondes données d'emplacement d'organe d'attache d'outil représentatives d'un ou de plusieurs emplacements d'un ou de plusieurs organes physiques d'attache d'outil du second outil associé ;
l'appareil de commande de guidage (110) peut être mis en opération pour recevoir un signal d'identification d'outil, le signal d'identification d'outil étant représentatif d'une identité de l'outil associé ;
le dispositif processeur (204) peut être mis en opération pour exécuter la logique de vérification de compatibilité d'outil pour :
sélectionner, sur la base du signal d'identification d'outil correspondant à un du premier ou du second type d'outil, un correspondant du premier ou du second ensemble de données d'outil à partir de la base de données d'outil en tant que données de caractéristique d'outil ;
déterminer automatiquement, sur la base des données de caractéristique d'outil et des données de caractéristique de porte-outil, la compatibilité d'outil entre le porte-outil et l'outil associé pour coupler mutuellement le porte-outil à l'outil associé ; et
générer les données de compatibilité d'outil sur la base de la détermination que la compatibilité d'outil entre le porte-outil et l'outil associé permet le couplage mutuel du porte-outil à l'outil.

3. Appareil d'aide virtuelle selon au moins l'une des revendications précédentes, comprenant en outre :
une interface opérateur couplée opérationnellement à l'appareil de commande de guidage (110), l'interface opérateur pouvant être mise en opération pour recevoir un signal de sélection d'outil en provenance d'un opérateur du tracteur (2), et pour générer le signal d'identification d'outil correspondant au signal de sélection d'outil reçu.

4. Appareil d'aide virtuelle selon au moins l'une des revendications précédentes, dans lequel :
le processeur peut être mis en opération pour exécuter la logique de vérification de compatibilité d'outil pour :
détecter, sur la base des données d'image d'outil, une indication d'identification d'outil portée sur l'outil ;
déterminer que l'indication détectée d'identification d'outil est représentative d'un du premier ou du second type d'outil ;
sélectionner, sur la base du fait qu'il est déterminé que l'indication détectée d'identification d'outil est représentative d'un du premier ou du second type d'outil, un correspondant du premier ou du second ensemble de données d'outil à partir de la base de données d'outil ; et
déterminer automatiquement, sur la base des données d'image d'outil et des premières ou des secondes données d'emplacement d'organe d'attache d'outil correspondant à l'un sélectionné du premier ou du second ensemble de données d'outil, la compatibilité d'outil entre le porte-outil et l'outil associé pour coupler mutuellement le porte-outil à l'outil associé, et générer les données de compatibilité d'outil sur la base de la détermination de la compatibilité d'outil entre le porte-outil et l'outil associé pour coupler mutuellement le porte-outil à l'outil.

5. Appareil d'aide virtuelle selon au moins l'une des revendications précédentes, dans lequel :
la logique stockée dans le dispositif mémoire (210) comprend un modèle d'apprentissage profond de détection d'outil ; et
le dispositif processeur (204) peut être mis en opération pour exécuter le modèle d'apprentissage profond de détection d'outil pour détecter automatiquement, sur la base des données d'image d'outil, la caractéristique physique de l'outil associé et stocker la caractéristique physique détectée de l'outil associé dans le dispositif mémoire (210) sous forme de données de caractéristique d'outil pour la détermination de la compatibilité d'outil entre le porte-outil et l'outil associé pour coupler mutuellement le porte-outil à l'outil.

6. Appareil d'aide virtuelle selon au moins l'une des revendications précédentes, dans lequel :
le système d'imagerie (120) peut être mis en opération pour générer les données d'image de zone de travail comprenant des données d'image d'outil représentatives d'une image d'un outil porté sur une extrémité du chargeur (10), et des données d'image de charge représentatives d'une image d'une charge associée disposée dans la zone de travail ;
le processeur peut être mis en opération pour exécuter la logique de guidage virtuel (211) pour générer, sur la base des données d'image de zone de travail :
des données de direction d'outil représentatives d'une direction d'outil de l'outil, et des données de guidage d'alignement de charge représentatives d'un trajet d'approche de charge fournissant l'accès à un organe de mise en prise de charge de la charge associée qui est mutuellement couplable à un organe d'attache de porte-outil correspondant du porte-outil ; et
l'unité d'affichage (130) peut être mise en opération pour afficher, sur la base des données d'image de zone de travail, des données de guidage d'alignement de charge, et des données de direction d'outil, des images pouvant être vues de la direction d'outil et du trajet de charge dans l'image pouvant être vue de la zone de travail, pour aider le mouvement du chargeur (10) pour positionner l'outil relativement à la charge associée pour mettre mutuellement en prise l'outil avec la charge associée.

7. Appareil d'aide virtuelle selon au moins l'une des revendications précédentes, dans lequel :
le dispositif processeur (204) peut être mis en opération pour exécuter la logique de guidage virtuel (211) pour générer les données de guidage d'alignement de charge sur la base des données d'image de charge ;
le dispositif processeur (204) peut être mis en opération pour exécuter la logique de guidage virtuel (211) pour générer les données de direction d'outil sur la base des données d'image d'outil ;
l'unité d'affichage (130) peut être mise en opération pour afficher, sur la base des données d'image de charge et des données de guidage d'alignement de charge, l'image pouvant être vue du trajet d'approche de charge superposée sur une image pouvant être vue de la charge associée affichée sur l'écran ; et
l'unité d'affichage (130) peut être mise en opération pour afficher, sur la base des données d'image d'outil et des données de direction d'outil, l'image pouvant être vue de la direction d'outil superposée sur une image pouvant être vue de l'outil affichée sur l'écran.

8. Appareil d'aide virtuelle selon au moins l'une des revendications précédentes, dans lequel :
le dispositif processeur (204) peut être mis en opération pour exécuter la logique de guidage virtuel (211) pour générer des données de rayon de trajet d'approche de charge sur la base des données de guidage d'alignement de charge ;
le dispositif processeur (204) peut être mis en opération pour exécuter la logique de guidage virtuel (211) pour générer des données de rayon de direction d'outil sur la base des données de direction d'outil ;
l'unité d'affichage (130) peut être mise en opération pour afficher, sur la base des données d'image de charge et des données de rayon de trajet d'approche de charge, l'image pouvant être vue du trajet d'approche de charge sous la forme d'une ou de plusieurs images pouvant être vues de rayon de trajet d'approche de charge s'étendant à partir de l'image pouvant être vue de la charge affichée sur l'écran ;
l'unité d'affichage (130) peut être mise en opération pour afficher, sur la base des données d'image d'outil et des données de rayon de direction d'outil, l'image pouvant être vue de la direction d'outil sous la forme d'une ou de plusieurs images pouvant être vues de rayon de direction d'outil s'étendant à partir de l'image pouvant être vue de l'outil affichée sur l'écran ; et
un alignement sur l'écran de l'une ou des plusieurs images pouvant être vues de rayon de trajet d'approche de charge affichées sur l'écran avec l'une ou les plusieurs images pouvant être vues de rayon de direction d'outil affichées sur l'écran, par le fait que l'opérateur élève, abaisse, et/ou incline l'outil porté sur le porte-outil et/ou meut le tracteur (2) autour d'un axe de lacet du tracteur (2) relativement à la charge associée, établit un alignement entre l'organe d'attache d'outil de l'outil et l'organe d'attache de charge de la charge associée pour une mise en place préparatoire d'une mise en prise mutuelle entre ceux-ci.

9. Appareil d'aide virtuelle selon au moins l'une des revendications précédentes, comprenant en outre :
des données de caractéristique de charge stockées dans le dispositif mémoire (210), les données de caractéristique de charge étant représentatives d'une caractéristique physique de la charge associée ;
des données de caractéristique d'outil stockées dans le dispositif mémoire (210), les données de caractéristique d'outil étant représentatives d'une caractéristique physique de l'outil ; et
une logique de vérification de compatibilité de charge stockée dans le dispositif mémoire (210),
dans lequel le processeur peut être mis en opération pour exécuter la logique de vérification de compatibilité de charge pour déterminer, sur la base des données de caractéristique de charge et des données de caractéristique d'outil, une compatibilité de charge entre l'outil et la charge associée pour mettre mutuellement en prise l'outil avec la charge associée, et générer des données de compatibilité de charge sur la base de la détermination de la compatibilité de charge entre l'outil et la charge associée pour mettre mutuellement en prise l'outil avec la charge associée, dans lequel l'unité d'affichage (130) peut être mise en opération pour afficher une image de confirmation de charge pouvant être vue, sur la base de la détermination de la compatibilité de charge pour confirmer, à l'opérateur, la compatibilité de charge déterminée entre l'outil et la charge associée.

10. Appareil d'aide virtuelle selon au moins l'une des revendications précédentes, dans lequel :
l'appareil de commande de guidage (110) comprend une base de données de charge stockée dans le dispositif mémoire (210), la base de données de charge comprenant un premier ensemble de données de charge corrélant un premier type de charge d'une première charge associée avec des premières données d'emplacement d'organe de mise en prise de charge représentatives d'un ou de plusieurs emplacements d'un ou de plusieurs organes physiques de mise en prise de charge de la première charge associée, et un second ensemble de données de charge corrélant un second type de charge d'une seconde charge associée avec des secondes données d'emplacement d'organe de mise en prise de charge représentatives d'un ou de plusieurs emplacements d'un ou de plusieurs organes physiques de mise en prise de charge du seconde charge associée ;
l'appareil de commande de guidage (110) peut être mis en opération pour recevoir un signal d'identification de charge, le signal d'identification de charge étant représentatif d'une identité de la charge associée ;
le dispositif processeur (204) peut être mis en opération pour exécuter la logique de vérification de compatibilité de charge pour :
sélectionner, sur la base du signal d'identification de charge correspondant à un du premier ou du second type de charge, un correspondant du premier ou du second ensemble de données de charge à partir de la base de données de charge en tant que données de caractéristique de charge ;
déterminer automatiquement, sur la base des données de caractéristique de charge et des données de caractéristique d'outil, la compatibilité de charge entre l'outil et la charge associée pour mettre mutuellement en prise l'outil avec l'outil ; et
générer les données de compatibilité de charge sur la base de la détermination de la compatibilité de charge entre l'outil et la charge associée pour mettre mutuellement en prise l'outil avec la charge associée.

11. Appareil d'aide virtuelle selon au moins l'une des revendications précédentes, comprenant en outre :
une interface opérateur couplée opérationnellement à l'appareil de commande de guidage (110), l'interface opérateur pouvant être mise en opération pour recevoir un signal de sélection de charge en provenance d'un opérateur du tracteur (2), et pour générer le signal d'identification de charge correspondant au signal de sélection de charge reçu.

12. Appareil d'aide virtuelle selon au moins l'une des revendications précédentes, dans lequel :
le processeur peut être mis en opération pour exécuter la logique de vérification de compatibilité de charge pour :
détecter, sur la base des données d'image de charge, une indication d'identification de charge portée sur la charge ;
déterminer que l'indication détectée d'identification de charge est représentative d'un du premier ou du second type d'outil ;
sélectionner, sur la base du fait qu'il est déterminé que l'indication détectée d'identification de charge est représentative d'un du premier ou du second type de charge, un correspondant du premier ou du second ensemble de données de charge à partir de la base de données de charge ; et
déterminer automatiquement, sur la base des données d'image de charge et des première ou des secondes données d'emplacement d'organe de mise en prise de charge correspondant à l'un sélectionné du premier ou du second ensemble de données de charge, la compatibilité de charge entre l'outil et la charge associée pour mettre mutuellement en prise l'outil avec la charge associée, et générer les données de compatibilité de charge sur la base de la détermination de la compatibilité de charge entre l'outil et la charge associée pour mettre mutuellement en prise l'outil avec la charge associée.
